# EUROPEAN PATENT APPLICATION

(11) **EP 2 600 677 A2**
(43) Date of publication of application: **05.06.2013**
(21) Application number: 12191220.8
(22) Date of filing: 05.11.2012
(51) Int. Cl.: H04W 76/00

(54) **Method for transmitting an opportunistic network related message**

(30) Priority: 30.11.2011 US 201113307090
(71) Applicant: Intel Mobile Communications GmbH, 85579 Neubiberg (DE)
(72) Inventor: Schmidt, Andreas, 38124 Braunschweig (DE); Bienas, Maik, 38124 Braunschweig (DE); Choi, Hyung-Nam, 22117 Hamburg (DE)
(74) Representative: Viering, Jentschura & Partner

(57) **Abstract**

In an aspect of this disclosure, a method (2900) for transmitting an opportunistic network related message is provided. The method (2900) may include generating (2902) an opportunistic network specific radio bearer carrying opportunistic network related message traffic; and transmitting (2904) the opportunistic network related message(s) via the generated opportunistic network specific radio bearer.

## Description

### Technical Field

The present disclosure relates to methods for transmitting an opportunistic network related message, a method for receiving an opportunistic network related message, and for processing messages, and it further relates to apparatuses for transmitting an opportunistic network related message, for receiving an opportunistic network related message, and for processing messages.

### Background

In an Opportunistic Network (ON), a mobile radio communication terminal device may use a so-called short range radio technology to connect to a centrally located mobile radio communication terminal device acting as a relaying node. An opportunistic network is generally under control of the Mobile Network Operator (MNO) and offers via the relaying nodes full connectivity to the MNO's service offerings. The radio link between a base station and the centrally located mobile radio communication terminal device acting as a relaying node of each ON may be based on any one of the well-known cellular radio access technologies (RATs), for instance 3GPP UMTS (Third Generation Partnership Project Universal Mobile Telecommunications Systems) with or without HSPA (High-Speed Packet Access), or 3GPP LTE (Third Generation Partnership Project Long Term Evolution), or 3GPP LTE-Advanced (Third Generation Partnership Project Long Term Evolution-Advanced) with or without CA (Carrier Aggregation). The radio technologies used within an ON could be based on a non-cellular (short range) radio technology, such as Bluetooth or WiFi (Wireless LAN, based on the "IEEE 802.11" family of standards).

### Summary

In an aspect of this disclosure, methods for transmitting an opportunistic network related message are provided. A method may include generating an opportunistic network specific radio bearer carrying opportunistic network related message traffic; and transmitting the opportunistic network related message via the generated opportunistic network specific radio bearer.

In another aspect of this disclosure, a method for processing messages may be provided. The method may include receiving an opportunistic network related control message via an opportunistic network specific radio bearer; receiving a user data message; and decoding the user data message in accordance with the opportunistic network related control message.

In another aspect of this disclosure, an apparatus for transmitting an opportunistic network related message may be provided. The apparatus may include a radio bearer generator configured to generate an opportunistic network specific radio bearer carrying opportunistic network related message traffic ; and a transmitter configured to transmit the opportunistic network related message via the generated opportunistic network specific radio bearer.

In another aspect of this disclosure, an apparatus for receiving an opportunistic network related message may be provided. The apparatus may include a receiver configured to receive an opportunistic network related message via an opportunistic network specific radio bearer which is configured to carry opportunistic network related message traffic; and a decoder configured to decode the received opportunistic network related message.

In another aspect of this disclosure, an apparatus for processing messages may be provided. The apparatus may include a first receiver configured to receive an opportunistic network related control message via an opportunistic network specific radio bearer; a second receiver configured to receive a user data message; and a decoder configured to decode the user data message in accordance with the opportunistic network related control message.

### Brief Description of the Drawings

In the drawings, like reference characters generally refer to the same parts throughout the different views. The drawings are not necessarily to scale, emphasis instead generally being placed upon illustrating the principles of various aspects of this disclosure. In the following description, various aspects are described with reference to the following drawings, in which:
FIG. 1 shows a mobile radio communication system in accordance with an aspect of this disclosure;
FIG. 2 shows a mobile radio communication terminal device in accordance with an aspect of this disclosure;
FIG. 3 shows a mobile radio communication base station device in accordance with an aspect of this disclosure;
FIG. 4 shows a state diagram illustrating possible protocol communication states in accordance with an aspect of this disclosure;
FIG. 5 shows a diagram illustrating an LTE protocol stack in accordance with an aspect of this disclosure;
FIG. 6 shows a diagram illustrating an LTE protocol stack implementation in the mobile radio communication terminal device, the mobile radio communication base station device and the Mobility Management Entities in accordance with an aspect of this disclosure;
FIG. 7 shows a diagram illustrating an LTE System Architecture Evolution in accordance with an aspect of this disclosure;
FIG. 8 shows the formation of two opportunistic networks in accordance with an aspect of this disclosure;
FIG. 9 shows an uplink communication protocol architecture provided in a mobile radio communication terminal device according to LTE in accordance with an aspect of this disclosure;
FIG. 10 shows a mobile radio communication system in accordance with an aspect of this disclosure;
FIG. 11 shows an uplink communication protocol architecture provided in a mobile radio communication terminal device configured as a relaying node communication device according to LTE in accordance with an aspect of this disclosure;
FIG. 12 shows an apparatus for transmitting an opportunistic network related message in accordance with an aspect of this disclosure;
FIG. 13 shows an apparatus for receiving an opportunistic network related message in accordance with an aspect of this disclosure;
FIG. 14 shows an apparatus for processing messages in accordance with an aspect of this disclosure;
FIG. 15 shows a portion of a mobile radio communication system in accordance with an aspect of this disclosure;
FIG. 16 shows a portion of a mobile radio communication system in accordance with an aspect of this disclosure;
FIG. 17 shows a portion of a mobile radio communication system in accordance with an aspect of this disclosure;
FIG. 18 shows a portion of a mobile radio communication system in accordance with an aspect of this disclosure;
FIG. 19 shows a portion of a mobile radio communication system in accordance with an aspect of this disclosure;
FIG. 20 shows a message flow diagram illustrating a successful establishment of an RRC connection in accordance with an aspect of this disclosure;
FIG. 21 shows a message flow diagram illustrating an RRC connection establishment process attempt, which is rejected by the network, in accordance with an aspect of this disclosure;
FIG. 22 shows a message flow diagram illustrating a successful re-configuration of an RRC connection in accordance with an aspect of this disclosure;
FIG. 23 shows a message flow diagram illustrating a failed RRC connection re-configuration process attempt in accordance with an aspect of this disclosure;
FIG. 24 shows a message flow diagram illustrating a release of an RRC connection, in accordance with an aspect of this disclosure;
FIG. 25 shows a message flow diagram illustrating a configuration of the opportunistic network behaviour of the relaying node in accordance with an aspect of this disclosure;
FIG. 26 shows a message flow diagram illustrating an OMU request in accordance with an aspect of this disclosure;
FIG. 27 shows a message flow diagram illustrating an OMU command in accordance with an aspect of this disclosure;
FIG. 28 shows a message flow diagram illustrating an OMU info in accordance with an aspect of this disclosure;
FIG. 29 shows a flow diagram illustrating a process for transmitting an opportunistic network related message in accordance with an aspect of this disclosure;
FIG. 30 shows a flow diagram illustrating a process for receiving an opportunistic network related message in accordance with an aspect of this disclosure; and
FIG. 31 shows a flow diagram illustrating a process for processing messages in accordance with an aspect of this disclosure.

### Detailed Description

The following detailed description refers to the accompanying drawings that show, by way of illustration, specific details and aspects in which the invention may be practiced.

The word "exemplary" is used herein to mean "serving as an example, instance, or illustration". Any implementation or design described herein as "exemplary" is not necessarily to be construed as preferred or advantageous over other implementations or designs.

In an aspect of this disclosure, a "circuit" may be understood as any kind of a logic implementing entity, which may be hardware, software, firmware, or any combination thereof. Thus, in an aspect of this disclosure, a "circuit" may be a hardwired logic circuit or a programmable logic circuit such as a programmable processor, e.g. a microprocessor (e.g. a Complex Instruction Set Computer (CISC) processor or a Reduced Instruction Set Computer (RISC) processor). A "circuit" may also be software being implemented or executed by a processor, e.g. any kind of computer program, e.g. a computer program using a virtual machine code such as, e.g. Java. Any other kind of implementation of the respective functions which will be described in more detail below may also be understood as a "circuit" in accordance with an aspect of this disclosure.

The terms "coupling" or "connection" are intended to include a direct "coupling" or direct "connection" as well as an indirect "coupling" or indirect "connection" respectively.

The term "protocol" is intended to include any piece of software and/or hardware, that is provided to implement part of any layer of the communication definition. "Protocol" may include the functionality of one or more of the following layers: physical layer (layer 1), data link layer (layer 2), network layer (layer 3), or any other sub-layer of the mentioned layers or any upper layer.

The communication protocol layers and its respective entities which will be described in the following may be implemented in hardware, in software, in firmware, or partially in hardware, and/or partially in software, and/or partially in firmware. In an aspect of this disclosure, one or more communication protocol layers and its respective entities may be implemented by one or more circuits. In an aspect of this disclosure, at least two communication protocol layers may be commonly implemented by one or more circuits.

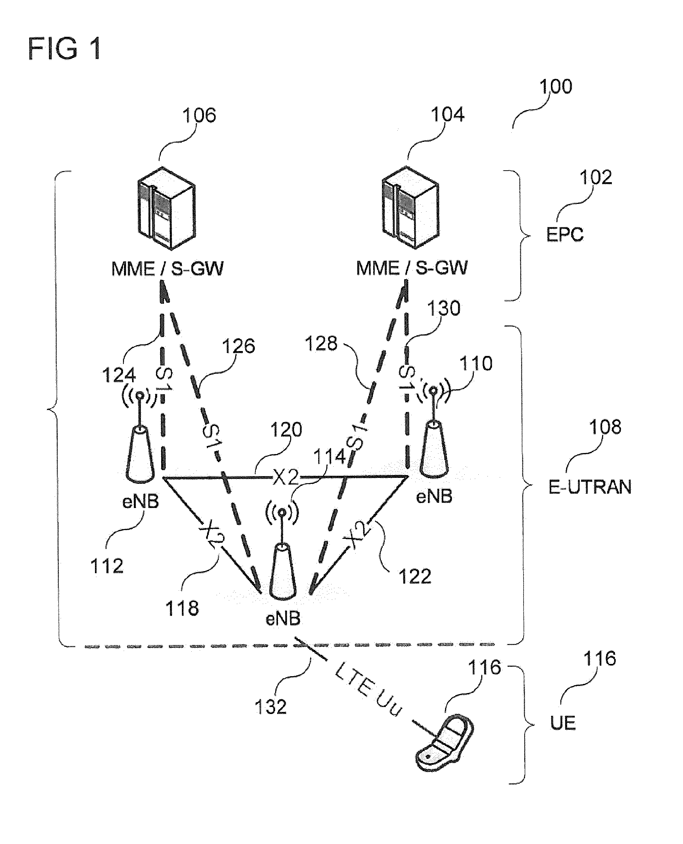

FIG. 1 shows a portion 100 of a mobile radio communication system in accordance with an aspect of this disclosure. Although various implementations are described in the context of an implementation in accordance with the Long Term Evolution (LTE) standard as described in 3GPP TS 36.300 v 10.3.0, it is to be noted that various implementations may also be implemented in accordance with other mobile radio communication systems such as e.g. another 3GPP mobile radio communication system (e.g. Universal Mobile Telecommunications System (UMTS)), a Code Division Multiple Access (CDMA) mobile radio communications standard, a Code Division Multiple Access 2000 (CDMA 2000) mobile radio communications standard, a Freedom of Mobile Multimedia Access (FOMA) mobile radio communications standard, or a Long Term Evolution Advanced (LTE-Advanced) mobile radio communications standard.

The air interface of an LTE mobile radio communication system, or E-UTRA (Evolved Universal Terrestrial Radio Access) is commonly referred to as '3.9G', although some North American operators recently made an attempt to name their LTE service offerings '4G' for marketing reasons. The first LTE release specified by 3GPP is Rel-8.

In comparison with its predecessor UMTS, an LTE mobile radio communication system in accordance with an aspect of this disclosure offers an air interface that has been further optimized for packet data transmission by improving the system capacity and the spectral efficiency. Among other enhancements, the maximum net transmission rate has been increased significantly, namely to 300 Mbps in the downlink transmission direction and to 75 Mbps in the uplink transmission direction. LTE supports scalable bandwidths of from 1.4 MHz to 20 MHz and is based on new multiple access methods, such as OFDMA/TDMA (Orthogonal Frequency Division Multiple Access / Time Division Multiple Access) in downlink direction (in other words, in a communication direction from a mobile radio tower, e.g. a base station or eNodeB, to a mobile radio communication terminal device, such as a handset device) and SC-FDMA/TDMA (Single Carrier Frequency Division Multiple Access / Time Division Multiple Access) in uplink direction (in other words, in a communication direction from a mobile radio communication terminal device, such as a handset device to a mobile radio tower, e.g. a base station or eNodeB). OFDMA/TDMA is a multicarrier multiple access method in which a subscriber is provided with a defined number of subcarriers in the frequency spectrum and a defined transmission time for the purpose of data transmission. The RF (radio frequency) capability of an LTE mobile radio communication terminal device, such as e.g. an LTE User Equipment (UE = mobile station, cell phone) for transmission and reception has been set to 20 MHz. A physical resource block (PRB) is the baseline unit of allocation for the physical channels defined in LTE. It may include a matrix of 12 subcarriers by 6 or 7 OFDMA/SC-FDMA symbols. At the physical layer a pair of one OFDMA/SC-FDMA symbol and one subcarrier is denoted as a 'resource element'.

As shown in FIG. 1, the portion 100 of the LTE mobile radio communication system in accordance with an aspect of this disclosure may include a core network 102, also referred to as Evolved Packet Core (EPC) 102, which may include, inter alia, one or more Mobility Management Entities / Serving Gateways (MME/S-GW) 104, 106. The portion 100 of the LTE mobile radio communication system may further include an Evolved Universal Terrestrial Radio Access Network (E-UTRAN) 108, which may include one or more base stations 110, 112, 114, which may also referred to as Evolved NodeBs (eNBs) 110, 112, 114, and one or more (in general an arbitrary number of) mobile radio communication terminal devices (as one implementation of a mobile radio communication terminal apparatus) 116, which may also be referred to as User Equipments (UEs) 116.

The E-UTRAN 108 may provide the E-UTRA user plane (Packet Data Convergence Protocol (PDCP) / Radio Link Control (RLC) / Medium Accoess Control (MAC)) and control plane (e.g. Radio Resource Control (RRC)) protocol terminations towards the UE 116. The eNBs 110, 112, 114 may be interconnected with each other by means of an X2 interface 118, 120, 122. The eNBs 110, 112, 114 may also be connected by means of an S1 interface 124, 126, 128, 130 to the EPC (Evolved Packet Core) 102, more specifically by means of the S1-MME interface to the MME (Mobility Management Entity) and by means of the S1-U interface to the Serving Gateway (S-GW). The S1 interface 124, 126, 128, 130 supports a many-to-many relation between MMEs/S-GWs 104, 106 and eNBs 110, 112, 114. In other words, an eNB 110, 112, 114 may be connected to more than one MME/S-GW 104, 106, and an MME/S-GW 104, 106 may be connected to more than one eNB 110, 112, 114. This enables a so-called 'Network Sharing' in LTE. The UE 116 may be connected to the eNBs 110, 112, 114 e.g. via an air interface such as e.g. a so-called Uu interface 132.

Each eNB 110, 112, 114 hosts at least one of (for example all of) the following functions. In other words, each eNB 110, 112, 114 may be configured to implement at least one of (for example all of) the following functions:

- Functions for Radio Resource Management: Radio Bearer Control, Radio Admission Control, Connection Mobility Control, Dynamic allocation of resources to UEs 116 in both uplink and downlink (scheduling);

- IP (Internet Protocol) header compression and encryption of user data stream;

- data integrity protection and verification;

- Selection of an MME 104, 106 at UE attachment to the E-UTRAN 108 when no routing to an MME 104, 106 can be determined from the information provided by the UE 116;

- Routing of User Plane data towards Serving Gateway (S-GW) 104, 106;

- Scheduling and transmission of paging messages (originated from the MME 104, 106);

- Scheduling and transmission of broadcast information (originated from the MME 104, 106 or Operations & Maintenance (O&M));

- Measurement and measurement reporting configuration for mobility and scheduling;

- Scheduling and transmission of Public Warning System (PWS), which may include Earthquake and Tsunami Warning System (ETWS) and Commercial Mobile Alert System (CMAS) messages (originated from the MME 104, 106); and

- Closed Subscriber Group (CSG) handling.

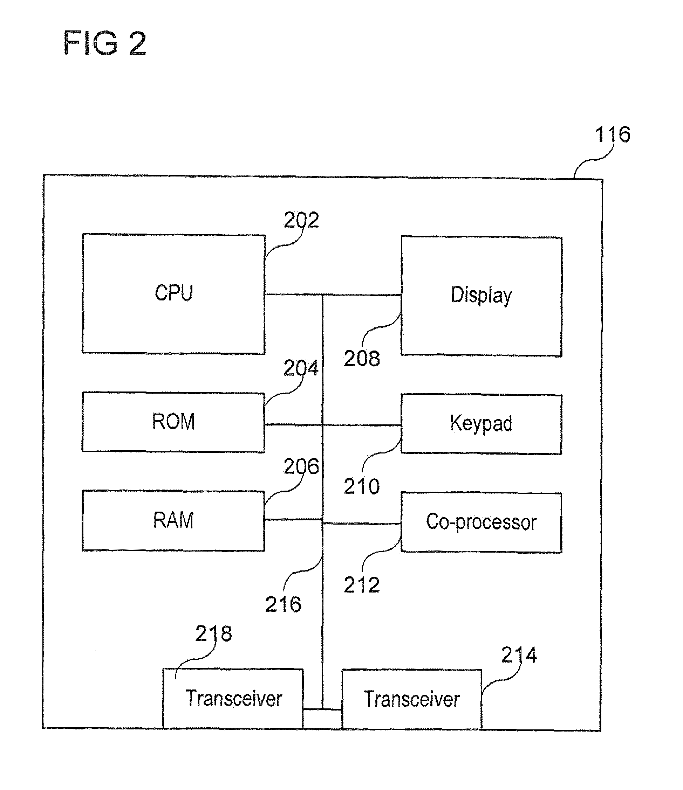

FIG. 2 shows a mobile radio communication terminal device 116 in accordance with an aspect of this disclosure.

As shown in FIG. 2, the mobile radio communication terminal device 116, such as an LTE UE 116, may include a processor 202, such as e.g. a microprocessor (e.g. a central processing unit (CPU)) or any other type of programmable logic device. Furthermore, the mobile radio communication terminal device 116 may include a first memory 204, e.g. a read only memory (ROM) 204 and/or a second memory 206, e.g. a random access memory (RAM) 206. Moreover, the mobile radio communication terminal device 116 may include a display 208 such as e.g. a touch sensitive display, e.g. a liquid crystal display (LCD) display or a light emitting diode (LED) display, or an organic light emitting diode (OLED) display. However, any other type of display may be provided as the display 208 in alternative implementations. The mobile radio communication terminal device 116 may in addition include any other suitable output device (not shown) such as e.g. a loudspeaker or a vibration actuator. The mobile radio communication terminal device 116 may include one or more input devices such as keypad 210 including a plurality of keys. The mobile radio communication terminal device 116 may in addition include any other suitable input device (not shown) such as e.g. a microphone. In case the display 208 is implemented as a touch sensitive display 208, the keypad 210 may be implemented by the touch sensitive display 208. Moreover, optionally, the mobile radio communication terminal device 116 may include a co-processor 212 to take processing load from the processor 202. Furthermore, the mobile radio communication terminal device 116 may include a transceiver 214. The above described components may be coupled with each other via one or more lines, e.g. implemented as a bus 216. The first memory 204 and/or the second memory 206 may be a volatile memory, for example a DRAM (Dynamic Random Access Memory) or a non-volatile memory, for example a PROM (Programmable Read Only Memory), an EPROM (Erasable PROM), EEPROM (Electrically Erasable PROM), or a flash memory, e.g., a floating gate memory, a charge trapping memory, an MRAM (Magnetoresistive Random Access Memory) or a PCRAM (Phase Change Random Access Memory) or a CBRAM (Conductive Bridging Random Access Memory). The program code used to be executed and thereby to control the processor 202 (and optionally the co-processor 212) may be stored in the first memory 204. Data (e.g. the messages received or to be transmitted via the transceiver 214) to be processed by the processor 202 (and optionally the co-processor 212) may be stored in the second memory 206. The transceiver 214 may be configured to implement a Uu interface 132 in accordance with LTE. The mobile radio communication terminal device 116 and the transceiver 214 may also be configured to provide MIMO radio transmission. Further, the mobile radio communication terminal device 116 may also include an additional transceiver 218, which may be configured to implement a short range radio technology, such as one as will be described in more detail below.

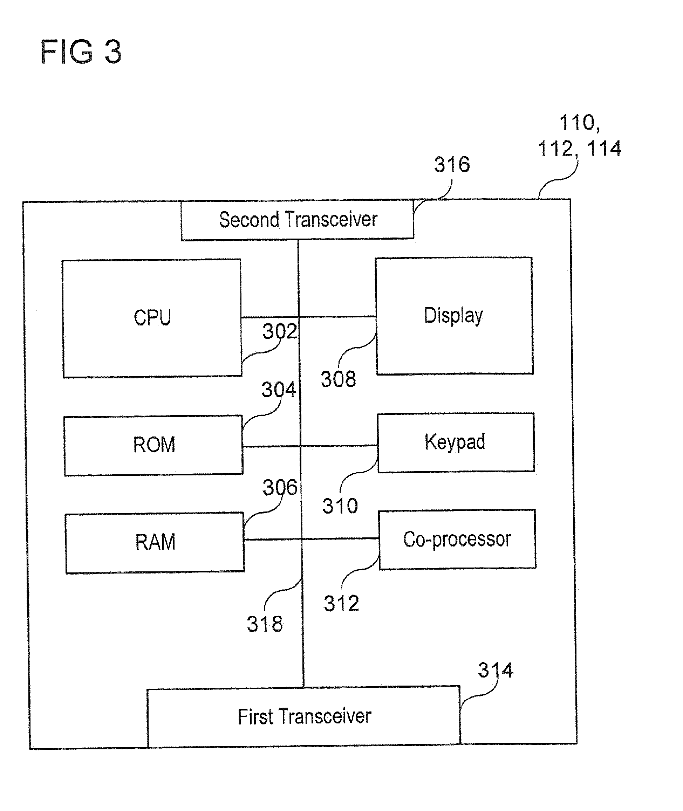

FIG. 3 shows a mobile radio communication base station device (such as an LTE Evolved NodeB or eNB) 110, 112, 114 in accordance with an aspect of this disclosure.

As shown in FIG. 3, the eNodeB 110, 112, 114, may include a processor 302, such as e.g. a microprocessor (e.g. a central processing unit (CPU)) or any other type of programmable logic device. Furthermore, eNB 110, 112, 114 may include a a first memory 304, e.g. a read only memory (ROM) 304, and/or a second memory 306, e.g. a random access memory (RAM) 306. Moreover, the eNB 110, 112, 114 may include a display 308 such as e.g. a touch sensitive display, e.g. a liquid crystal display (LCD) display or a light emitting diode (LED) display, or an organic light emitting diode (OLED) display. However, any other type of display may be provided as the display 308 in alternative implementations. The eNB 110, 112, 114 may in addition include any other suitable output device (not shown) such as e.g. a loudspeaker or a vibration actuator. The eNB 110, 112, 114 may include one or more input devices such as keypad 310 including a plurality of keys, and/or any other suitable input device (not shown) such as e.g. a microphone. In case the display 208 is implemented as a touch sensitive display 208, the keypad 310 may be implemented by the touch sensitive display 208. The eNB 110, 112, 114 may include a co-processor 312 to take processing load from the processor 302. Furthermore, the eNB 110, 112, 114 may include a first transceiver 314 and a second transceiver 316. The above described components may be coupled with each other via one or more lines, e.g. implemented as a bus 318. The first memory 304 and/or the second memory 306 may be a volatile memory, for example a DRAM (Dynamic Random Access Memory) or a non-volatile memory, for example a PROM (Programmable Read Only Memory), an EPROM (Erasable PROM), EEPROM (Electrically Erasable PROM), or a flash memory, e.g., a floating gate memory, a charge trapping memory, an MRAM (Magnetoresistive Random Access Memory) or a PCRAM (Phase Change Random Access Memory) or a CBRAM (Conductive Bridging Random Access Memory). The program code used to be executed and thereby to control the processor 302 (and optionally the co-processor 312) may be stored in the first memory 304. Data (e.g. the messages received or to be transmitted via the first transceiver 314 and/or the second transceiver 316) to be processed by the processor 302 (and optionally the co-processor 312) may be stored in the second memory 306. The first transceiver 314 may be configured to implement a Uu interface 132 in accordance with LTE. Furthermore, the second transceiver 316 may be configured to implement an X2 interface 118, 120, 122 and/or an S1 interface 124, 126, 128, 130.

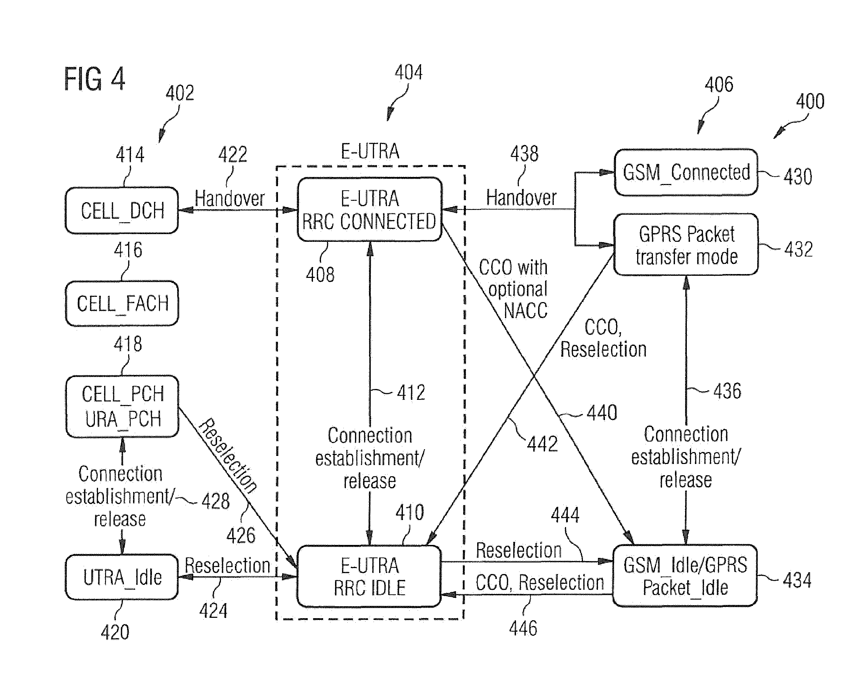

FIG. 4 shows a state diagram 400 illustrating possible protocol communication states, e.g. Radio Resource Control (RRC) protocol communication states. The respective states which will be described in the following may be implemented in the mobile radio communication terminal device, or User Equipment (UE) 116 and, correspondingly, in the mobile radio communication base station device (e.g. eNB) 110, 112, 114.

In more detail, the state diagram 400 shows the RRC states 402 in accordance with UMTS implementing an UMTS UTRAN, the RRC states 404 in accordance with LTE implementing an E-UTRAN, and the RRC states 406 in accordance with GSM (Global System for Mobile Communication) implementing a GSM RAN (or GERAN).

As shown in FIG. 4, there are only two E-UTRA RRC states 404 defined for the UE 116. FIG. 4 provides an overview of these two states, and also illustrates the mobility support between the E-UTRAN (the two states depicted in the centre of the figure), the UTRAN (3G UMTS, left part of the figure) including the UTRA RRC states 402 and the GERAN (2G and 2.5G, right part of the figure) including the GSM RRC states 406. A UE 116 is in E-UTRA RRC_CONNECTED state 408 when an RRC connection has been established. If this is not the case, i.e. if no RRC connection is established, the UE 116 is in E-UTRA RRC_IDLE state 410. A first state transition 412 between E-UTRA RRC_CONNECTED state 408 and E-UTRA RRC_IDLE state 410 depends on an RRC connection establishment/release.

The two E-UTRAN RRC states 408, 410 in E-UTRA may be characterised as follows:

E-UTRA RRC IDLE state 410:

- Mobility is controlled by UE 116.

- The UE 116

-- may acquire system information (SI);

-- monitors a paging channel to detect incoming calls and SI change notifications;

-- performs neighbouring cell measurements for the cell (re-)selection process.

E-UTRA RRC CONNECTED state 408:

A UE 116 is in RRC_CONNECTED state 408 when an RRC connection has been established.

- Transfer of unicast data to/from UE 116 may be provided.

- Mobility is controlled by the network (handover and mobile radio cell change order).

- The UE 116

-- may acquire system information (SI);

-- monitors a paging channel and/or System Information Block (SIB) Type 1 content to detect SI change;

-- monitors control channels associated with the shared data channel to determine if data is scheduled for it;

-- performs neighbouring cell measurements and does measurement reporting to assist the network in making handover decisions;

-- provides channel quality and feedback information to the network.

In case the mobile radio communication terminal device (or UE) 116 also supports UMTS also the functions of the UMTS protocol stack may be implemented. In this case, the UE 116 may implement e.g. the following UTRA RRC states 402: an RRC Cell_DCH state 414; an RRC Cell_FACH state 416; an RRC Cell_PCH/URA_PCH state 418; and an RRC UTRA_Idle state 420. There may be provided a second state transition 422 between the E-UTRA RRC_CONNECTED state 408 and the UTRA RRC Cell_DCH state 414 to implement a handover process from UMTS to LTE and vice versa while an RRC connection has been established. Furthermore, there may be provided a third state transition 424 between the E-UTRA RRC_IDLE state 410 and the UTRA RRC UTRA_Idle state 420 to implement a mobile radio cell reselection process from UMTS to LTE and vice versa while no RRC connection has been established. A fourth state transition 426 may be provided from the UTRA RRC Cell_PCH/URA_PCH state 418 to the E-UTRA RRC_IDLE state 410 to implement a mobile radio cell reselection process from UMTS to LTE while the mobile radio communication terminal device 116 (e.g. the UE 116) is in the UTRA RRC Cell_PCH/URA_PCH state 418. A fifth state transition 428 between the UTRA RRC UTRA_Idle state 420 and the UTRA RRC Cell_PCH/URA_PCH state 418 may depend on an RRC connection establishment/release.

In case the mobile radio communication terminal device (UE) 116 also supports GSM/GPRS, also the functions of the GSM/GPRS protocol stack may be implemented. In this case, the UE 116 may implement e.g. the following GSM/GPRS RRC states 406: a GSM_Connected state 430; a GPRS Packet transfer mode state 432; and a GSM_Idle/GPRS Packet_Idle state 434. A sixth state transition 436 between the GSM_Idle/GPRS Packet_Idle state 434 and the GPRS Packet transfer mode state 432 may depend on an RRC connection establishment/release. In an aspect of this disclosure, there may be provided a seventh state transition 438 between the E-UTRA RRC_CONNECTED state 408, the GSM_Connected state 430, and the GPRS Packet transfer mode state 432 may be provided to implement a handover process from LTE to GSM/GPRS and vice versa while an RRC connection has been established.

The following additional state transitions may be provided and implemented in the UE 116:

- an eighth state transition 440 from the E-UTRA RRC_CONNECTED state 408 to the GSM_Idle/GPRS Packet_Idle state 434 to implement a mobile radio cell change order (CCO) with or without network assisted cell change (NACC);

- a ninth state transition 442 from the GPRS Packet transfer mode state 432 to the E-UTRA RRC_IDLE state 410 to implement a CCO and/or a mobile radio cell reselection process;

- a tenth state transition 444 from the E-UTRA RRC_IDLE state 410 to the GSM_Idle/GPRS Packet_Idle state 434 to implement a mobile radio cell reselection process; and

- an eleventh state transition 446 from the GSM_Idle/GPRS Packet_Idle state 434 to the E-UTRA RRC_IDLE state 410 to implement a CCO and/or a mobile radio cell reselection process.

In the following, the protocol stack of the LTE air interface (LTE Uu interface 132) in accordance with an aspect of this disclosure will be described in more detail.

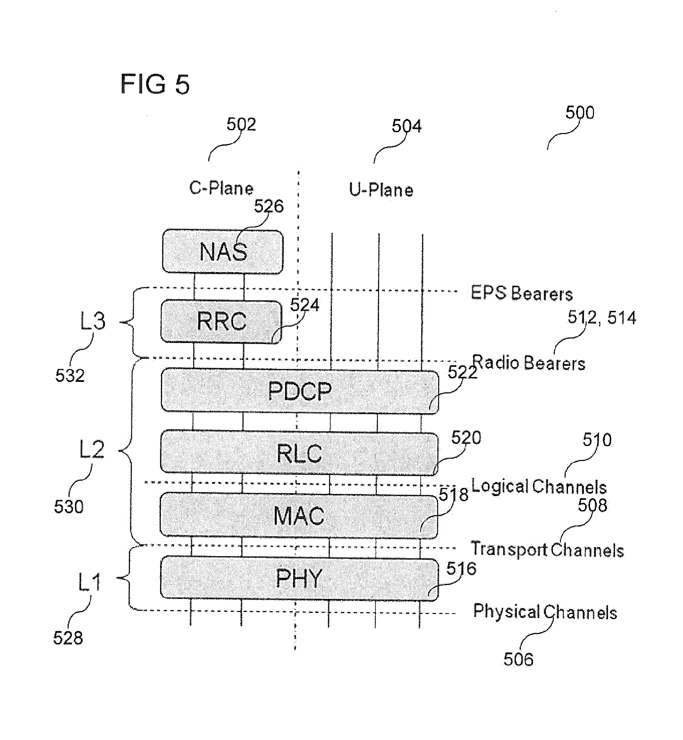

FIG. 5 illustrates an exemplary LTE stack corresponding to the LTE Uu air interface 132. The Uu air interface 132 may be logically divided into three protocol layers 528, 530, 532. The entities ensuring and providing the functionality of the respective protocol layers are implemented both in the UE 116 and in the eNodeB 110, 112, 114, e.g. by means of the processor 202, 302, and/or the co-processor 212, 312, or by any other additional logic provided in the mobile radio communication terminal device 116 and/or in the mobile radio communication base station device 110, 112, 114. The bottommost layer is the physical layer PHY 516, which represents the protocol layer 1 (L1) 528 according to the OSI (Open System Interconnection) reference model. The protocol layer arranged above the physical layer PHY 516 is the data link layer, which represents the protocol layer 2 (L2) 530 according to the OSI reference model. In the LTE communication system, L2 530 may include a plurality of sublayers, namely the Medium Access Control (MAC) sublayer 518, the Radio Link Control (RLC) sublayer 520 and the Packet Data Convergence Protocol (PDCP) sublayer 522. The topmost layer of the Uu air interface 132 is the network layer, which is the protocol layer 3 (L3) 532 according to the OSI reference model and may include the Radio Resource Control (RRC) layer 524.

Each protocol layer provides the protocol layer above it with its services via defined service access points (SAPs). To provide a better understanding of the protocol layer architecture, the SAPs were assigned unambiguous names: The PHY 516 provides its services to MAC 518 via transport channels 508, the MAC 518 provides its services to RLC 520 via logical channels 510, and the RLC 520 provides its services to RRC 524 and PDCP 522 as data transfer as function of the RLC 520 mode, i.e. TM (Transparent Mode), UM (Unacknowledged Mode) and AM (Acknowledged Mode). Further, the PDCP 522 provides its services to RRC 524 and user plane upper layers via radio bearers 512, 514, in more detail as Signaling Radio Bearers (SRB) 512 to RRC 524 and Data Radio Bearers (DRB) 514 to user plane upper layers. LTE currently supports a maximum of 3 SRBs 512 and 11 DRBs 514.

FIG. 5 shows a diagram illustrating an LTE protocol stack 500, in other words an LTE radio protocol architecture 500, which may be implemented in the mobile radio communication terminal device (UE) 116 as well as in the mobile radio communication base station device (eNB) 110, 112, 114. The LTE radio protocol architecture 500 may not just be split horizontally into the above-described protocol layers; but it may also split be vertically into a "control plane" (c-plane) 502 and the "user plane" (u-plane) 504. The entities of the control plane 502 may be used to handle the exchange of signaling data between the UE 116 and the eNB 110, 112, 114, which are required among other for the establishment, re-configuration and release of physical channels 506, transport channels 508, logical channels 510, signaling radio bearers 512 and data radio bearers 514, whereas the entities of the user plane 504 may be used to handle the exchange of user data between the UE 116 and the eNB 110, 112, 114. Each protocol layer has particular prescribed functions:

- A physical layer PHY 516 is primarily responsible and configured for i) error detection on the transport channel 508; ii) channel encoding/decoding of the transport channel 508; iii) Hybrid ARQ soft combining; iv) mapping of the coded transport channel 508 onto physical channels 506; v) modulation and demodulation of physical channels 506.

- A medium access control layer MAC 518 is primarily responsible and configured for i) mapping between logical channels 508 and transport channels 510; ii) error correction through HARQ; iii) logical channel 508 prioritisation; iv) transport format selection.

- A radio link control layer RLC 520 is primarily responsible and configured for i) error correction through ARQ, ii) concatenation, segmentation and reassembly of RLC SDUs (Service Data Unit); iii) re-segmentation and reordering of RLC data PDUs (Protocol Data Unit). Further, the RLC 520 may be modeled such that there is an independent RLC 520 entity for each radio bearer (RB) 512, 514 (data radio bearer (DRB) 514 or signaling radio bearer (SRB) 512).

- A Packet Data Convergence Protocol layer PDCP 522 is primarily responsible and configured for header compression and decompression of IP (Internet Protocol) data flows, ciphering and deciphering of user plane data and control plane data, and integrity protection and integrity verification of control plane data. The PDCP 522 may be modeled such that each RB 512, 514 (i.e. DRB 514 and SRB 512, except for SRBO) is associated with one PDCP 522 entity. Each PDCP 522 entity is associated with one or two RLC 520 entities depending on the RB 512, 514 characteristic (i.e. unidirectional or bi-directional) and RLC 520 mode.

- A Radio Resource Control layer RRC 524 is primarily responsible and configured for the control plane 502 signaling between UE 116 and eNB 110, 112, 114 and performs among other the following functions: i) broadcast of system information, ii) paging, iii) establishment, reconfiguration and release of physical channels 506, transport channels 508, logical channels 510, signaling radio bearers 512 and data radio bearers 514. Signaling radio bearers 512 may be used for the exchange of RRC messages between UE 116 and eNB 110, 112, 114.

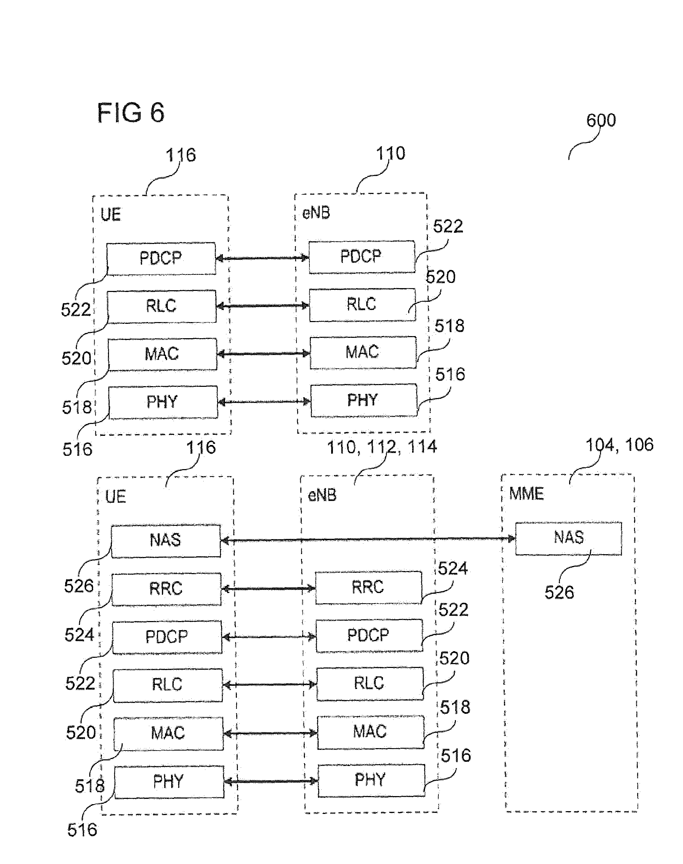

The differences between c-plane (control plane) 502 and u-plane (user plane) 504 of the E-UTRA (LTE) technology are depicted in a diagram 600 in FIG. 6. The RRC protocol 524 and all lower layer protocols (PDCP 522, RLC 520, MAC 518, and PHY 516) terminate in the eNB 110 112, 114, while the NAS (Non-Access Stratum) protocol layer 526 terminates in the MME 104, 106 in the EPC 102. The upper part of FIG. 6 shows the protocol stack for the u-plane (User-plane) 504 and the lower part of FIG. 6 shows the protocol stack for the c-plane (Control-plane) 502 of the LTE communication system.

Enhancements for the LTE technology are, however, not restricted to the air interface of the LTE mobile radio communication system. The core network architecture for 3GPP's LTE wireless communication standard is also enhanced in an aspect of this disclosure. This endeavour is usually referred to as SAE (System Architecture Evolution).

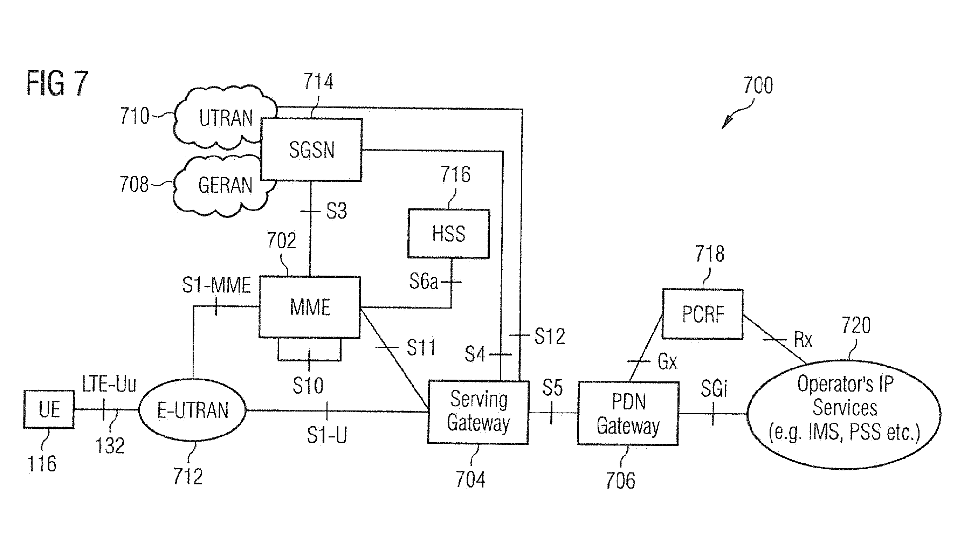

FIG. 7 shows a diagram 700 illustrating an LTE System Architecture Evolution in accordance with an aspect of this disclosure.

Illustratively, the SAE is the evolution of the GPRS Core Network, with some differences:

- the SAE has a simplified architecture;

- the SAE is an all IP Network (AIPN);

- the SAE provides support for higher throughput and lower latency radio access networks (RANs);

- the SAE provides support for, and mobility between, multiple heterogeneous RANs, including legacy systems as GPRS, but also non-3GPP systems (such as e.g. WiMAX).

The main component of the SAE architecture is the Evolved Packet Core (EPC) 102 and its sub-components are:

Mobility Management Entity (MME) 104, 106, 702:

The MME 104, 106, 702 is the key control-node for the LTE radio access network (E-UTRAN) and may hold one or more (e.g. all) of the following functions:

- NAS signalling;

- NAS signalling security;

- AS Security control;

- Inter CN node signalling for mobility between 3GPP access networks;

- Idle mode UE 116 Reachability (including control and execution of paging retransmission);

- Tracking Area List (TAL) management (for UE 116 in idle and active mode);

- Packet Data Network Gateway (PDN GW) and Serving GW selection;

- MME 104, 106, 702 selection for handovers with MME 104, 106, 702 change;

- SGSN selection for handovers to 2G or 3G 3GPP access networks;

- Roaming;

- Authentication;

- Bearer management functions including dedicated bearer establishment;

- Support for PWS (which includes ETWS and CMAS) message transmission;

- Optionally performing paging optimisation.

Serving Gateway (S-GW) 104, 106, 704:

The S-GW may hold one or more (e.g. all) of the following functions:

- The local Mobility Anchor point for inter-eNB handover;

- Mobility anchoring for inter-3GPP mobility;

- E-UTRAN idle mode downlink packet buffering and initiation of network triggered service request procedure;

- Lawful Interception;

- Packet routing and forwarding;

- Transport level packet marking in the uplink and the downlink;

- Accounting on user and QCI granularity for inter-operator charging;

- UL and DL charging per UE, PDN, and QCI.

PDN Gateway (P-GW) 706:

The PDN Gateway provides connectivity from the UE 116 to external packet data networks by being the point of exit and entry of traffic for the UE 116. A UE 116 may have simultaneous connectivity with more than one P-GW 706 for accessing multiple PDNs. The P-GW 706 may perform policy enforcement, packet filtering for each user, charging support, lawful Interception and packet screening. Another role of the P-GW 706 may be to act as the anchor for mobility between 3GPP and non-3GPP technologies such as WiMAX and 3GPP2 (CDMA 1X and EvDO).

In FIG. 7 the network architecture of a 3GPP communication system with three different Radio Access Networks (RANs) is shown (for the non-roaming case).

1) GERAN 708: GERAN 708 is an abbreviation for GSM EDGE Radio Access Network (also referred to as 2G and 2.5G).

2) UTRAN 710: UTRAN 710 stands for UMTS Terrestrial Radio Access Network and is a collective term for the NodeBs and Radio Network Controllers (RNCs) which make up the UMTS radio access network. This communications network, commonly referred to as 3G, can carry many traffic types from real-time Circuit Switched to IP based Packet Switched. The UTRAN 710 contains at least one NodeB that is connected to at least one Radio Network Controller (RNC). An RNC provides control functionalities for one or more NodeB(s). A NodeB and an RNC can be the same device, although typical implementations have a separate RNC located in a central location serving multiple NodeBs. An RNC together with its corresponding NodeBs are called the Radio Network Subsystem (RNS). There can be more than one RNS present per UTRAN 710.

3) E-UTRAN 712: E-UTRAN 712 is the 3GPP Radio Access Network for LTE (3.9G). The E-UTRA air interface uses OFDMA for the downlink (tower to handset) and Single Carrier FDMA (SC-FDMA) for the uplink (handset to tower). It employs MIMO with up to four antennas per station. The use of OFDM enables E-UTRA 712 to be much more flexible in its use of spectrum than the older CDMA based systems, such as UTRAN 710. OFDM has a link spectral efficiency greater than CDMA, and when combined with modulation formats such as 64QAM, and techniques as MIMO, E-UTRA is expected to be considerably more efficient than W-CDMA with HSDPA and HSUPA.

Merely for illustrative purposes, FIG. 7 shows a Serving GPRS Support Node (SGSN) 714, which is connected to the MME 702 via an S3 interface, and to the Serving Gateway 704 via an S12 interface. Furthermore, FIG. 7 shows a Home Subscriber Server (HSS) 716, which is connected to the MME 702 via an S6a interface, and a Policy Control and Charging Rules Function entity (PCRF) 718 connected with the PDN Gateway 706, as well as various Mobile Radio Network Operator's IP services 720 such as e.g. IP Multimedia Subsystem (IMS), end-to-end Packet-switched Streaming Service (PSS), etc. coupled to the PDN Gateway 706 as well as to the PCRF 718.

One or more of the mobile radio communication terminal device (UE) 116 may be configured to provide an opportunistic network (ON) with other mobile radio communication terminal devices (UEs) 116. Therefore, some more details about the formation of an ON will be described in the following.

UEs 116 of today are not only equipped with cellular RAT modems primarily used to connect permanently to a cellular network (e.g. GSM, UMTS, LTE, and LTE-Advanced). A large number of UEs is also equipped with short range radio technology modems that are designed to get sporadic access via technologies such as Bluetooth or WiFi (IEEE 802.11).

Some possible short range radio technologies which may be provided are listed as follows:

- a personal area networks (Wireless PANs) radio communication subfamily, which may include e.g. IrDA (Infrared Data Association), Bluetooth, UWB, Z-Wave and ZigBee; and

- a wireless local area networks (W-LANs) radio communication sub-family,which may include e.g. HiperLAN/2 (HIgh PErformance Radio LAN; an alternative ATM-like 5 GHz standardized technology), IEEE 802.11a (5 GHz), IEEE 802.11g (2.4 GHz), IEEE 802.11n, and IEEE 802.11VHT (VHT = Very High Throughput).

The main characteristics of a cellular network may be for example:

- almost perfect availability;

- seamless mobility; and

- expensive and limited spectrum usage.

The frequent mentioning of non-cellular (short range) radio technologies, such as Bluetooth or WiFi (Wireless LAN, based on the "IEEE 802.11" family of standards), throughout the present disclosure does not mean a general restriction to these two typical types of (short range) radio technologies. Instead, it should be noted that an opportunistic network (ON) can also be established utilizing other radio technologies without departing from the spirit and scope of the methods described in this document.

In contrast to this, short range technologies such as those listed above may share the following characteristics:

- usage of the unlicensed bands (which are free of charge and offer usually more bandwidth and more throughput per user);

- coverage area of short range technologies is small (< 100m); and

- mobility between different base stations is usually not offered, because most of them are not operated by the same operator but by different private individuals.

Both technologies may have different advantages and disadvantages. New ideas are coming up these days to combine the two different technologies, namely to offer cellular services via the license free spectrum.

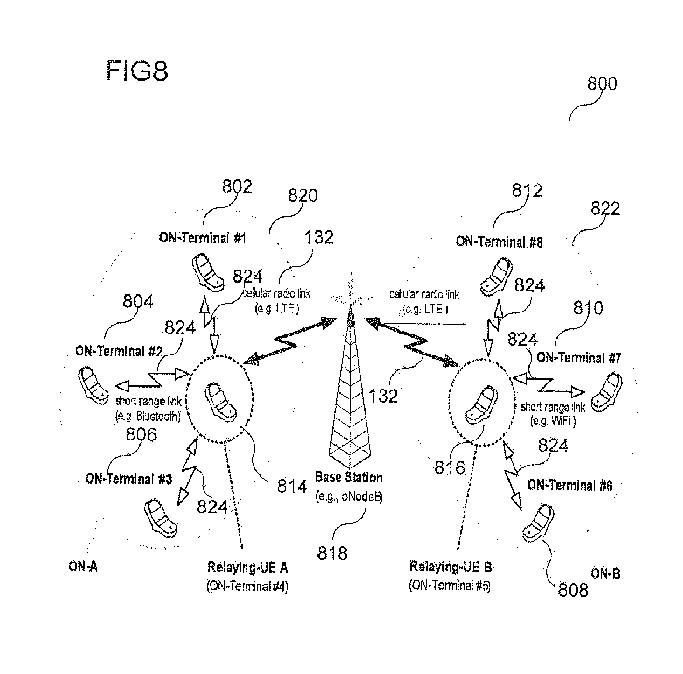

This can be enabled by the formation of an opportunistic (or hierarchical) network (as shown in diagram 800 in FIG. 8). In an opportunistic network (ON), mobile radio communication terminal devices 802, 804, 806, 808, 810, 812 are using short range technology to connect to a centrally located UE 814, 816 acting as a relaying node (also referred to as "Relaying-UE" 814, 816). This Relaying-UE 814, 816 is connected with the cellular network (e.g. via a base station 818, e.g. via an eNB 818) via a cellular RAT and - at the same time - with one or several other mobile radio communication terminal devices (ON-Terminals) 802, 804, 806, 808, 810, 812 via a short range radio technology, in other words via short range radio technology connections 824. It distributes data among ON-Terminals (within the ON) 802, 804, 806, 808, 810, 812 and forwards data between the ON-Terminals 802, 804, 806, 808, 810, 812 and the infrastructure. Therefore the ON-Terminals 802, 804, 806, 808, 810, 812 can use the unlicensed band to obtain (provide) services from (to) the cellular network. This concept may be advantageous for the operator of the mobile radio cellular network as the expensive resources from the licensed spectrum are saved due to more efficient usage. The users of the ON-Terminals 802, 804, 806, 808, 810, 812 benefit from accessing the services from the cellular network with larger data rates at lower costs. Models based on reimbursement for the user providing the relaying node ("Relaying-UE") 814, 816 may be provided.

An opportunistic network (ON) may be understood as a network, in which a mobile radio communication device (such as e.g. a mobile radio communication terminal device) is configured to provide a mobile radio cell based wide area network technology (such as e.g. the ones as defined above, e.g. 3GPP technologies such as e.g. UMTS, UMTS LTE; UMTS LTE-Advanced, etc.) as well as a short range radio technology (such as e.g. the ones as defined above). Furthermore, in an opportunistic network (ON), this mobile radio communication device illustratively provides a "temporary base station" or a "relaying node" for a mobile radio cell based network and provides one or more mobile radio short range connections to one or more other mobile radio communication terminal devices. Thus, the mobile radio communication device acting as "relaying node" provides a mobile radio cell connection to a mobile radio cell wide area network base station on the one hand and a short range radio connection to the one or more other mobile radio communication terminal devices on the other hand. Thus, the "relaying node" provides a communication connection between the one or more other mobile radio communication terminal devices and one or more mobile radio cell wide area network base stations into a core network of the mobile radio cell wide area network.

FIG. 8 gives an example architecture overview with two Opportunistic Networks (ONs) 820, 822. Opportunistic Networks 820, 822 are generally under control of the Mobile Network Operator (MNO) and offer via relaying nodes full connectivity to the MNO's service offerings. The mobile radio communication terminal devices #1 through #4 802, 804, 806, 814 form a first Opportunistic Network (ON-A) 820, and the mobile radio communication terminal devices #5 through #8 808, 810, 812, 816 form a second Opportunistic Network (ON-B) 822. In the first Opportunistic Network (ON-A) 820 the mobile radio communication terminal devices #1 through #3 802, 804, 806 lack a certain capability (for example Multiple-Input Multiple-Output (MIMO)) to provide high data throughput and make use of the "Relaying-UE A" 814 (ON-Terminal #4 814 acting as a relaying node) that is e.g. capable of MIMO technology to get an appropriate connection to the base station 818. In wireless technology MIMO (Multiple-Input and Multiple-Output) is the use of multiple antennas at both the transmitter and receiver to improve communication performance. It is one of several forms of smart antenna technology that may be provided in the mobile radio communication terminal devices 116, 802, 804, 806, 808, 810, 812, 814, 816 in accordance with an aspect of this disclosure. In LTE support for MIMO in a UE 116 is optional. In the second Opportunistic Network (ON-B) 822 the mobile radio communication terminal devices #6 through #8 808, 810, 812 are e.g. located at the cell edge and suffer from very poor channel conditions to the cellular base station 818. These mobile radio communication terminal devices 808, 810, 812 rely on "Relaying-UE B" 816 (ON-Terminal #5 816 acting as a relaying node) to get a connection to the base station 818. The radio link between the base station 818 and the centrally located "Relaying-UEs" 814, 816 of each ON 820, 822 is for example based on any one of the as such well-known cellular RATs (for instance 3GPP UMTS with or without HSPA, or 3GPP LTE, or 3GPP LTE-Advanced with or without CA (Carrier Aggregation)). The radio technologies used within the first Opportunistic Network (ON-A) 820 and the second Opportunistic Network (ON-B) 822 could be based on a non-cellular (short range) radio technology, such as Bluetooth or WiFi (Wireless LAN, based on the "IEEE 802.11" family of standards) or any other suitable short range radio technology such as those which have been described above. In the example of FIG. 8 the relaying nodes 814, 816 (mobile radio communication terminal devices #4 814 and #5 816) are LTE UEs 116 offering a data forwarding functionality.

Opportunistic networks in this respect are always Mobile Network Operator (MNO) governed (through resources, policies, and information/knowledge) and can be regarded as coordinated extensions of the MNO's infrastructure that typically exist only for a limited amount of time. Said dynamic infrastructure extensions enable application provisioning to users in the most efficient manner by involvement of different nodes of the infrastructure (cellular macro base stations, cellular femto cells, access points operating in the ISM band, etc.) and different mobile nodes.

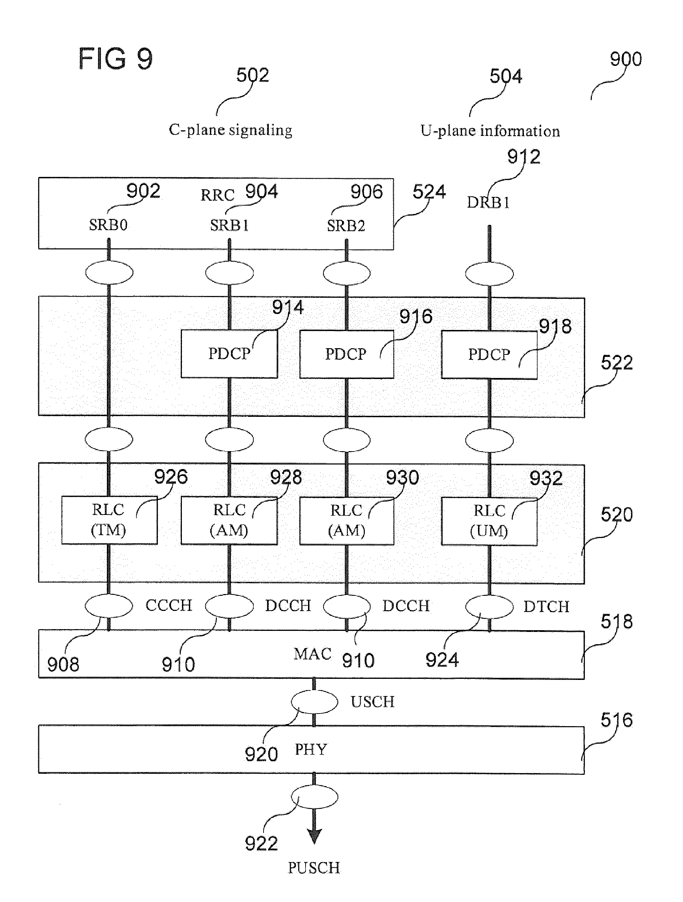

FIG. 9 shows an uplink communication protocol architecture 900 provided in a mobile radio communication terminal device 116, 814 and 816 (and also in 802, 804, 806, 808, 810, 812) according to LTE in accordance with an aspect of this disclosure.

As shown in FIG. 9, Signalling Radio Bearers (SRBs) 902, 904, 906 are defined between a UE 116 and an eNB 110, 112, 114, 818 as Radio Bearers (RB) 902, 904, 906, 912 that are used only for the transmission of RRC and NAS messages. More specifically, the following three SRBs 902, 904, 906 may be defined:

- SRB0 (also referred to as SRB type 0) 902 is configured to transmit RRC messages using the CCCH (Common Control Channel) logical channel 908;

- SRB 1 (also referred to as SRB type 1) 904 is configured to transmit RRC messages (which may include a piggybacked NAS message) as well as for NAS messages prior to the establishment of SRB2 906, all using DCCH (Dedicated Control Channel) logical channel 910;

- SRB2 (also referred to as SRB type 2) 906 is configured to transmit NAS messages, using DCCH (Dedicated Control Channel) logical channel 910. SRB2 906 has a lower-priority than SRB 1 904 and is always configured by E-UTRAN after security activation.

In downlink piggybacking of NAS messages is used only for one dependent (i.e. with joint success/ failure) procedure: bearer establishment/ modification/ release. In uplink NAS message piggybacking is used only for transferring the initial NAS message during connection setup. The NAS messages transferred via SRB2 906 are also contained in RRC messages, which however do not include any RRC protocol control information.

Once security is activated, all RRC messages on SRB1 904 and SRB2 906, including those containing NAS or non-3GPP messages, are integrity protected and ciphered by PDCP 522. The NAS may independently apply additional integrity protection and ciphering to NAS messages. The establishment of SRBs 902, 904, 906 is a prerequisite for the establishment of Data Radio Bearers (DRBs) 912.

An EPS bearer/E-RAB is the level of granularity for bearer level Quality of Service (QoS) control in the EPC/E-UTRAN. Service Data Flows (SDFs) mapped to the same EPS bearer receive the same bearer level packet forwarding treatment (e.g. scheduling policy, queue management policy, rate shaping policy, RLC configuration, etc.).

One EPS bearer/E-RAB is established when the UE 116 connects to a PDN, and that remains established throughout the lifetime of the PDN connection to provide the UE 116 with always-on IP connectivity to that PDN. That bearer is referred to as the default bearer. Any additional EPS bearer/E-RAB that is established to the same PDN is referred to as a dedicated bearer. The initial bearer level QoS parameter values of the default bearer are assigned by the network, based on subscription data. The decision to establish or modify a dedicated bearer can only be taken by the EPC 102, and the bearer level QoS parameter values are always assigned by the EPC 102.

FIG. 9 shows established bearers across the UL protocol architecture 900 in an exemplary UE 116, 802, 804, 806, 808, 810, 812, 814, 816 according to LTE. In the left part of FIG. 9 (c-plane 502) the three SRBs 902, 904, 906 are depicted and in the right part of the picture (u-plane 504) one DRB 912 is depicted. Except of SRB0 902 all other signalling radio bearers 904, 906 and data radio bearers 912 are associated with one respectively assigned and associated PDCP entity 914, 916, 918 as no PDCP functionality is required for SRB0 902. The physical layer PHY 516 provides its services to the medium access control layer MAC 518 via the Uplink Shared Channel (USCH) transport channel 920 that is mapped to Physical Uplink Shared Channel (PUSCH) physical channel 922 on which the data from USCH 920 is transmitted over the Uu air interface 132 to eNB 110, 112, 114. In the u-plane 504 the service is mapped to the data radio bearer DRB1 912 using Dedicated Traffic Channel (DTCH) logical channel 924. Furthermore, it is to be noted that in an aspect of this disclosure, for each PDCP entity 914, 916, 918 (and for the SRB0 902), at least one respective RLC entity 926, 928, 930, 932 may be provided.

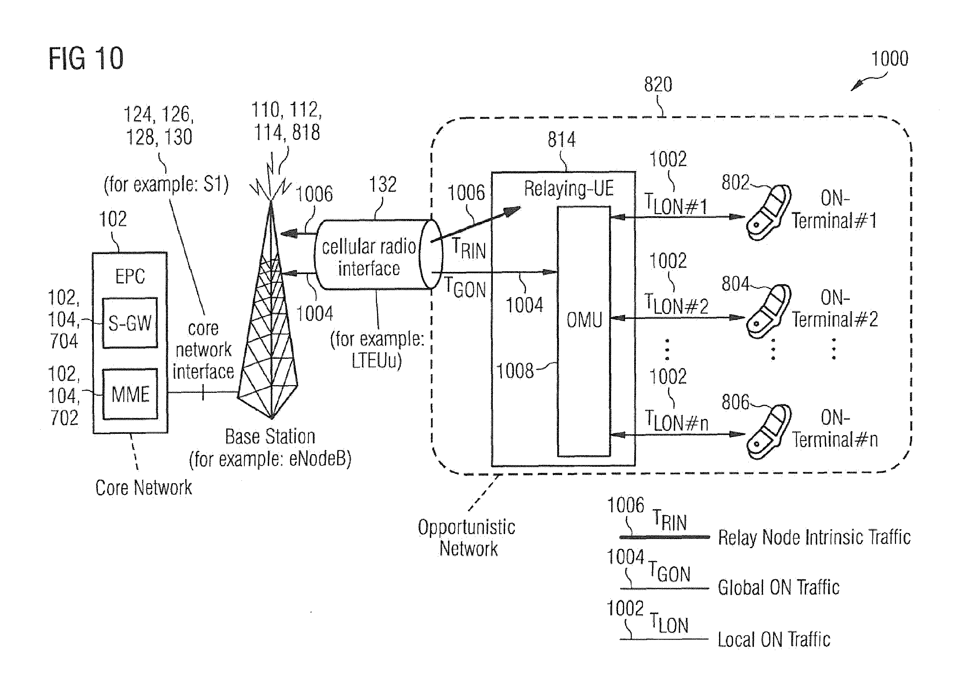

FIG. 10 shows a portion of a mobile radio communication system 1000 in accordance with an aspect of this disclosure.

Those mobile radio communication terminal devices (such as e.g. UEs) that are assigned the role of a relaying node ("Relaying-UE") in an opportunistic or hierarchical network scenario may continue to remain regular mobile radio communication terminal devices (such as e.g. UEs). This means in addition to the traffic caused by/destined for the ON they generate and consume their own traffic:

1) Relaying nodes (such as e.g. mobile radio communication terminal device (UE) 814) serve the ON (e.g. the first ON 820), i.e. they distribute data among ON-Terminals (e.g. mobile radio communication terminal devices 802, 804, 806) within the ON (e.g. the first ON 820) and they forward data between the ON-Terminals (e.g. mobile radio communication terminal devices 802, 804, 806) and the MNO's infrastructure. These types of traffic are referred to as Local-ON-Traffic (TLON) 1002 (traffic between the Relaying Node 814 and the other mobile radio communication terminal devices 802, 804, 806 not acting as the relaying node of the respective ON, e.g. the first ON 820) and Global-ON-Traffic (TGON) 1004 (traffic between the Relaying Node 814 and the mobile radio communication base station device 818 the Relaying Node 814 is connected to) in an aspect of this disclosure. In many cases, an instance of Local-ON-Traffic (TLON) 1002 may trigger Global-ON-Traffic (TGON) 1004 and vice versa;

2) Additionally, relaying nodes (e.g. relaying nodes 814, 816) may also act as 'normal' mobile radio communication terminal devices (e.g. 'normal' UEs) having own data connections into the MNO's infrastructure. This means they represent a data source and/or a data sink of their own. This type of traffic may be referred to as RN-Intrinsic-Traffic (TRIN) 1006 (traffic between the Relaying Node 814 acting with respect to this traffic as a normal mobile radio communication terminal device and not as a relaying node, and the mobile radio communication base station device 818 the Relaying Node 814 is connected to).

The conventional c-plane concept for LTE does not take separation of signalling traffic on the cellular radio interface (e.g., on the LTE Uu air interface 132) into account to control Global-ON-Traffic 1004 and RN-Intrinsic-Traffic 1006 independently from each other, which may be provided for the formation of Opportunistic Networks in LTE. The corresponding features provided may be related for instance to:

Separation of data flows:

It may be beneficial to separate the signalling data that is used to control an Opportunistic Network (ON) from the 'normal' (c-plane 502 or u-plane 504) traffic caused by/destined for the relaying node 814, 816. ON 820, 822 specific traffic may be used for anyone of the following functionalities: ON 820, 822 advertising, ON 820, 822 (node) discovery, ON 820, 822 (node) suitability determination, ON 820, 822 configuration, ON 820, 822 formation, ON 820, 822 operation, ON 820, 822 management, and ON 820, 822 termination.

Prioritization purposes (for instance at MAC Layer 518):

The MNO (Mobile Network Operator) may want to prioritize messages for ON 820, 822 management over c-plane 502 data for 'regular' UEs 116, 802, 804, 806, 808, 810, 812 (not acting as a Relaying Node). Thus, influencing grouping of logical channels 510 at MAC Layer 518 for ON 820, 822 control would enhance ON 820, 822 performance.

Error correction (for instance at RLC Layer 520):

Since from ON Terminal 802, 804, 806, 808, 810, 812 (not acting as a Relaying Node) perspective the relaying node 814, 816 is considered a network node (i.e. it is providing a temporary extension of the operator's radio access network to the ON Terminals 802, 804, 806, 808, 810, 812), the operator may want to apply another type of error correction to the Global-ON-Traffic (TGON) 1004 in order to avoid loss of data for this class of c-plane 502 data.

Data encryption (for instance at PDCP Layer 522):

Since from ON Terminal 802, 804, 806, 808, 810, 812 (not acting as a Relaying Node) perspective the relaying node 814, 816 is considered a network node (i.e. it is providing a temporary extension of the operator's radio access network to the ON Terminals 802, 804, 806, 808, 810, 812), the operator may want to apply another type of encryption to the Global-ON-Traffic (TGON) 1004 in order to better protect this class of c-plane 502 data. In another aspect of this disclosure, the operator may want to apply another type of data integrity protection to the Global-ON-Traffic (TGON) 1004.

Addressing of the right interface:

Messages for ON 820, 822 control may be NAS messages. However, (for the network side) this does not mean that these are terminating in the same MME 104, 106 that is controlling the 'normal' UE's 802, 804, 806, 808, 810, 812 behaviour. And this does not mean (for the terminal side) that these are terminating in the same termination points (interfaces) as the traffic that is controlling the 'normal' UE's 802, 804, 806, 808, 810, 812 behaviour. Fast identification and unambiguous exchange of information between the RRC protocol termination point and an ON Management Unit (OMU) 1008 in the relaying node 814, 816 may be ensured.

A c-plane separation approach is provided in an aspect of this disclosure since not necessarily both types of traffic (Global-ON-Traffic 1004 and RN-Intrinsic-Traffic 1006) have to be active at the same time. Due to differentiated c-plane 502 handling of the Global-ON-Traffic TGON 1004 and the RN-Intrinsic-Traffic TRIN 1006, these two types of traffic may be fed to different termination points in the relaying node 814, 816.

As will be described in more detail below, an ON Management Unit (OMU) 1008 may be provided in the relaying node ("Relaying-UE") 814, 816 that is under control of the MNO, e.g. for the management, operation and control of an Opportunistic Network 820, 822. The OMU 1008 may be implemented e.g. by the processor 202 and/or the co-processor 212 and/or a specific circuitry which may be provided in the mobile radio communication terminal device (UE) 116, 814, 816.

A distinct Signalling Radio Bearer (SRB) on the air interface 132 for the control of the Opportunistic Network (ON) 820, 822 may be offered by the relaying node 814,816.

Various aspects of this disclosure may provide one or more of the following effects/features:

- Signalling data that is used to control an Opportunistic Network (ON) 820, 822 may be separated (in an aspect of this disclosure into a specific Signalling Radio Bearer provided specifically for the signalling data that is used to control an Opportunistic Network (ON) 820, 822) from the 'normal' (c-plane 502 or u-plane 504) traffic caused by/destined for the relaying node 814, 816 in accordance with an aspect of this disclosure.

- The MNO may assign to this class of c-plane 502 data a different

-- logical channel priority,

-- error correction method,

-- encryption algorithm, and

-- integrity algorithm.

- The signalling data that is used to control an Opportunistic Network (ON) 820, 822 may be easily identified, in other words determined, in the peer entities and quickly transported to the right termination points (such as the OMU 1008).

A mobile radio architecture as well as mobile radio communication devices may be provided which are configured for the management, operation and control of Opportunistic Networks (ONs) 820, 822. For this purpose, an ON Management Unit (OMU) 1008 may be introduced in the relaying node ("Relaying-UE") 814, 816, wherein the OMU 1008 may be under control of the MNO. Having in mind that Opportunistic Networks (ONs) 820, 822 are temporary and MNO coordinated extensions of the MNO's infrastructure, the MNO in an aspect of this disclosure may be enabled to control the functional behaviour of the OMU 1008 residing in the relaying node ("Relaying-UE") 814, 816 with respect to

- Relaying node 814, 816 selection,

- Relaying node 814, 816 configuration,

- ON 820, 822 advertising,

- ON 820, 822 discovery,

- ON 820, 822 suitability determination,

- ON 820, 822 node discovery,

- ON 820, 822 node suitability determination,

- ON 820, 822 configuration,

- ON 820, 822 formation,

- Relaying node 814, 816 operation,

- ON 820, 822 operation,

- ON 820, 822 management,

- ON-Terminal access management,

- ON-Terminal release management,

- Relaying node 814, 816 re-selection,

- ON 820, 822 termination, and

- Relaying node 814, 816 release,

e.g. by means of control plane enhancements in the air interface, such as e.g. in the LTE air interface 132.

A distinct Signalling Radio Bearer (SRB) may be provided which is configured for the control of Opportunistic Networks (ON) to provide one or more the above mentioned features.

Illustratively, a dedicated signalling radio bearer (SRB) for ON specific traffic may be introduced into the protocol stack, e.g. into the LTE protocol stack. This dedicated signalling radio bearer may also be referred to as signalling radio bearer - opportunistic network (SRB-ON) and may be activated between an eNodeB 818 and a relaying node 814, 816.

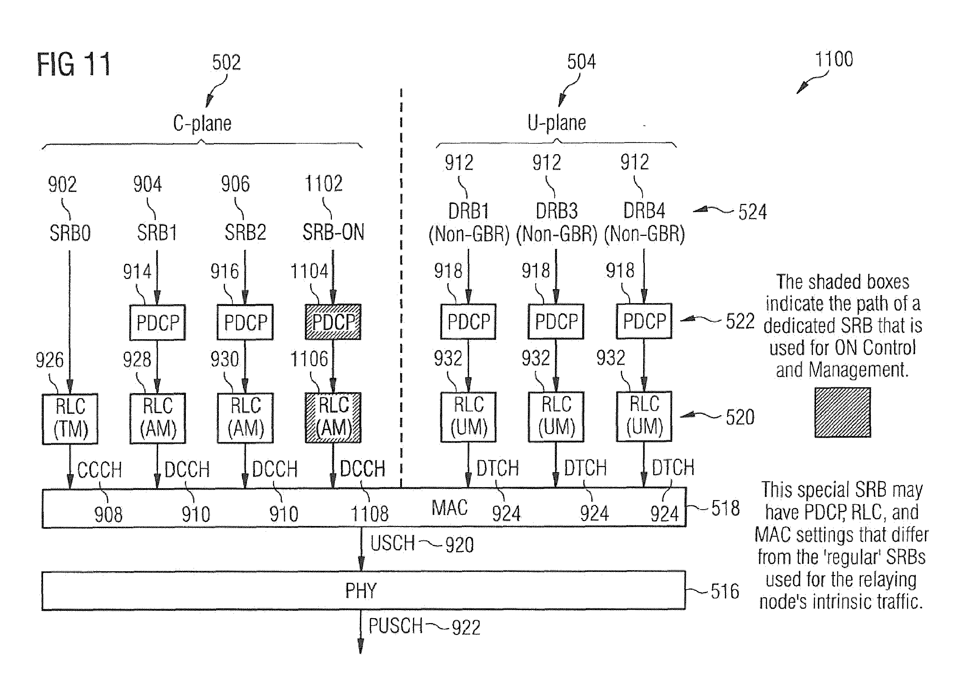

FIG. 11 shows an uplink communication protocol architecture 1100 provided in a mobile radio communication terminal device configured as a relaying node communication device according to LTE in accordance with an aspect of this disclosure.

As shown in FIG. 11, an additional signalling radio bearer - opportunistic network (SRB-ON) 1102, which is configured to, e.g. only, carry opportunistic network related messages, may be provided in an aspect of this disclosure. The SRB-ON 1102 may be implemented (i.e., may terminate) in the OMU 1008, for example. Furthermore, as also shown in FIG. 11, an individual PDCP entity 1104, which is assigned to the SRB-ON 1102 and, e.g. only, carries traffic via the SRB-ON 1102, may be provided in the PDCP layer 522, more accurately, in the control plane 502 of the PDCP layer 522. Moreover, an individual RLC entity 1106, which is assigned to the individual ON specific PDCP entity 1104 and which carries traffic via the individual ON specific PDCP entity 1104, may be provided in the RLC layer 520, more accurately, in the control plane 502 of the RLC layer 520. The individual ON specific RLC entity 1106 may use a DCCH logical channel 1108 for sending and receiving RLC PDUs.

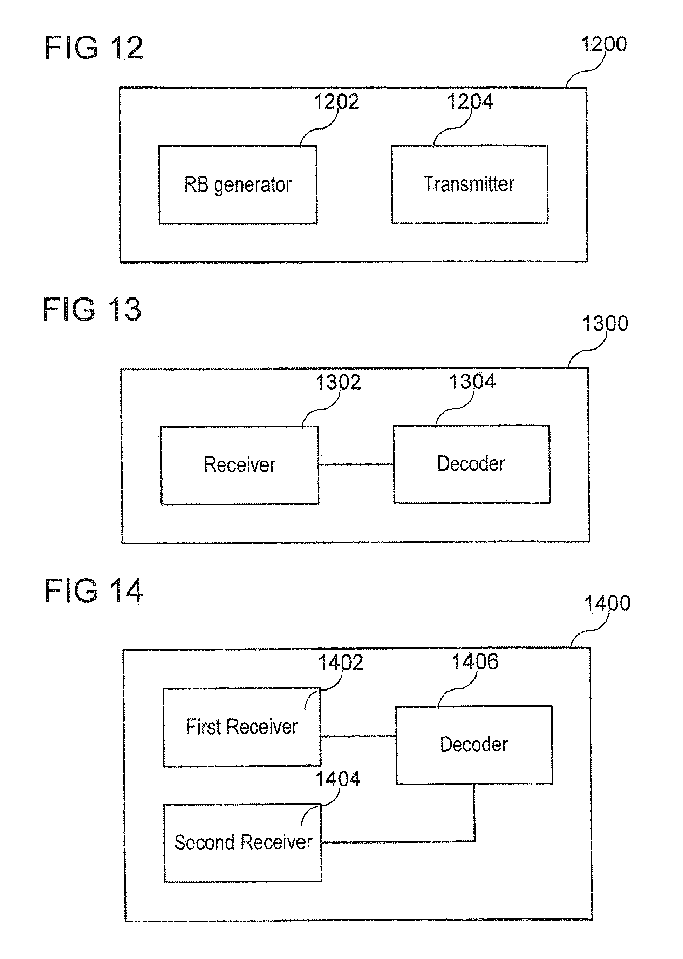

In general, as shown in FIG. 12, in order to provide the SRB-ON 1102, an apparatus 1200 for transmitting an opportunistic network related message may be provided (which e.g. may be implemented by the processor 202 and/or the co-processor 212 or any other dedicated circuitry and which optionally may be part of the OMU 1008). The apparatus 1200 may include a radio bearer generator 1202 configured to generate an opportunistic network specific radio bearer (e.g. the SRB-ON 1102), e.g. only, carrying opportunistic network related messages, and a transmitter 1204 configured to transmit an opportunistic network related message via the generated opportunistic network specific radio bearer (e.g. the SRB-ON 1102). The RB generator 1202 and the transmitter 1204, which may be understood as an interlayer transmitter, may be provided in the PDCP layer 522.

The radio bearer generator 1202 may be configured to generate the opportunistic network specific radio bearer as an opportunistic network specific signaling radio bearer. Furthermore, the radio bearer generator 1202 may be configured to generate the opportunistic network specific signaling radio bearer as an opportunistic network specific signaling radio bearer of type 1. Moreover, the opportunistic network related message may be an opportunistic network related control message such as e.g. an RRC control message. The opportunistic network related control message may include information to control at least one of the following: separation of data flows of one or more user data messages; prioritization of logical channels to be generated; error detection; error correction; data encryption; data integrity protection; and addressing one or more messages. The opportunistic network specific radio bearer may be a radio bearer in accordance with a Third Generation Partnership Project mobile radio communication standard, e.g. in accordance with a Long Term Evolution mobile radio communication standard, e.g. in accordance with a Universal Mobile Telecommunications Standard mobile radio communication standard. Further, a mobile radio communication terminal apparatus and/or a mobile radio communication base station apparatus may be provided which includes such an apparatus.

Furthermore, as shown in FIG. 13, an apparatus 1300 for receiving an opportunistic network related message may be provided (which e.g. may be implemented by the processor 202 and/or the co-processor 212 or any other dedicated circuitry and which optionally may be part of the OMU 1008). The apparatus 1300 may include a receiver 1302 configured to receive an opportunistic network related message via an opportunistic network specific radio bearer (e.g. the SRB-ON 1102) which is configured to, e.g. only, carry opportunistic network related messages; and a decoder 1304 (which may be coupled to the receiver 1302) configured to decode the received opportunistic network related message. The receiver 1302 and the decoder 1304 may be provided in the PDCP layer 522.

In an aspect of this disclosure, both apparatuses 1200, 1300 may be implemented in one common circuit such as in the processor 202 and/or the co-processor 212 or any other dedicated circuitry.

The opportunistic network specific radio bearer (SRB-ON) may be an opportunistic network specific signaling radio bearer. The opportunistic network specific signaling radio bearer may be an opportunistic network specific signaling radio bearer of type 1. The opportunistic network related message may be an opportunistic network related control message such as e.g. an opportunistic network related radio resource control message. The opportunistic network related control message may include information to control at least one of the following: separation of data flows of one or more user data messages; prioritization of logical channels to be generated; error detection; error correction; data encryption; data integrity protection; and addressing one or more messages. The opportunistic network specific radio bearer may be a radio bearer in accordance with a Third Generation Partnership Project mobile radio communication standard, e.g. in accordance with a Long Term Evolution mobile radio communication standard, e.g. in accordance with a Universal Mobile Telecommunications Standard mobile radio communication standard. Further, a mobile radio communication terminal apparatus may be provided which may include such an apparatus for transmitting an opportunistic network related message or an apparatus for receiving an opportunistic network related message, and a mobile radio communication base station apparatus may be provided which may include such an apparatus.

Furthermore, as shown in FIG. 14, an apparatus 1400 for processing messages may be provided (which e.g. may be implemented by the processor 202 and/or the co-processor 212 or any other dedicated circuitry and which optionally may be part of the OMU 1008). The apparatus 1400 may include a first receiver 1402 configured to receive an opportunistic network related control message via an opportunistic network specific radio bearer (e.g. the SRB-ON 1102); a second receiver 1404 configured to receive a user data message; and a decoder 1406 (which may be coupled to the first receiver 1402 and the second receiver 1404) configured to decode the user data message in accordance with the opportunistic network related control message. The first receiver 1402 may include or be formed by the individual ON specific PDCP entity 1104 and the second receiver 1404 may include or be formed by a PCDP entity 918 of the user plane 504. Also, the first receiver 1402, the second receiver 1404 and the decoder 1406 may be provided in the PDCP layer 522.

In an aspect of this disclosure, the opportunistic network specific radio bearer (SRB-ON) may be an opportunistic network specific signaling radio bearer. In this case, the opportunistic network specific signaling radio bearer may be an opportunistic network specific signaling radio bearer of type 1. The opportunistic network related message may be an opportunistic network related control message such as e.g. an opportunistic network related radio resource control message. The opportunistic network related control message may include information to control at least one of the following: separation of data flows of one or more user data messages; prioritization of logical channels to be generated; error detection; error correction; data encryption; data integrity protection; and addressing one or more messages. The opportunistic network specific radio bearer may be a radio bearer in accordance with a Third Generation Partnership Project mobile radio communication standard, e.g. in accordance with a Long Term Evolution mobile radio communication standard, e.g. in accordance with a Universal Mobile Telecommunications Standard mobile radio communication standard. A mobile radio communication terminal apparatus, or a mobile radio communication base station, may be provided which may include such an apparatus. The apparatus may further include a determiner (which may be implented as a circuit) configured to determine as to whether the decoded user data message is a local message to be received by the apparatus decoding the user data message or as to whether the decoded user data message is to be forwarded by the apparatus decoding the user data message to another apparatus. The apparatus may further include a transmitter configured to transmit the user data message to the other apparatus in case it has been determined that the decoded user data message is to be forwarded by the apparatus decoding the user data message to another apparatus.

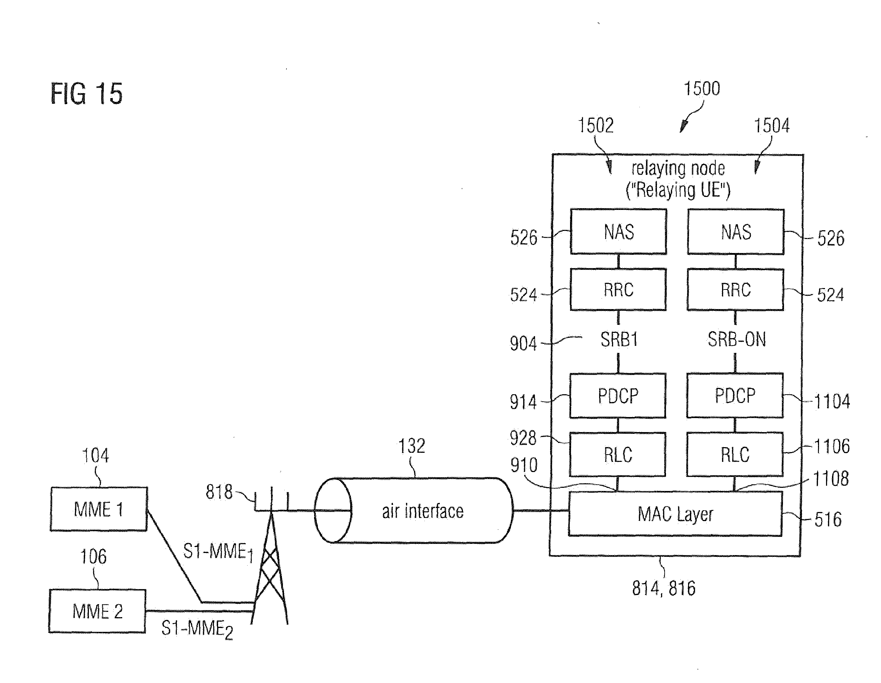

FIG. 15 shows a portion 1500 of a mobile radio communication system in accordance with an aspect of this disclosure.

As shown in FIG. 15, the mobile radio communication terminal device (UE) 814, 816 acting as the relaying node in the opportunistic network (ON) 820, 822 provides the conventional LTE protocol stack as described with reference to FIG. 9 including the PHY layer (not shown), the MAC layer 516, the RLC layer 518 including the RLC layer entity 928, the PDCP layer 520 including PDCP layer entity 914, an SRB1 904 as well as an RRC layer 524 entity and an NAS layer 526 entity. Furthermore, the mobile radio communication terminal device (UE) 814, 816 acting as the relaying node in the opportunistic network (ON) 820, 822 provides an LTE protocol stack with a dedicated ON-specific SRB-ON 1102 as described above in accordance with an aspect of this disclosure. Thus, as shown in FIG. 15, mobile radio communication terminal device (UE) 814, 816 may include the MAC layer 516, the RLC layer 518 including the individual ON specific RLC entity 1106, the PDCP layer 520 including the individual ON specific PDCP entity 1104, the SRB-ON 1102 as well as an RRC layer 524 entity and an NAS layer 526 entity. Thus, two independent control plane 502 protocol communication paths are illustrativeley provided, a first protocol communication path 1502 for traffic not relating to an ON 820, 822, and a second protocol communication path 1504 for traffic relating to an ON 820, 822.

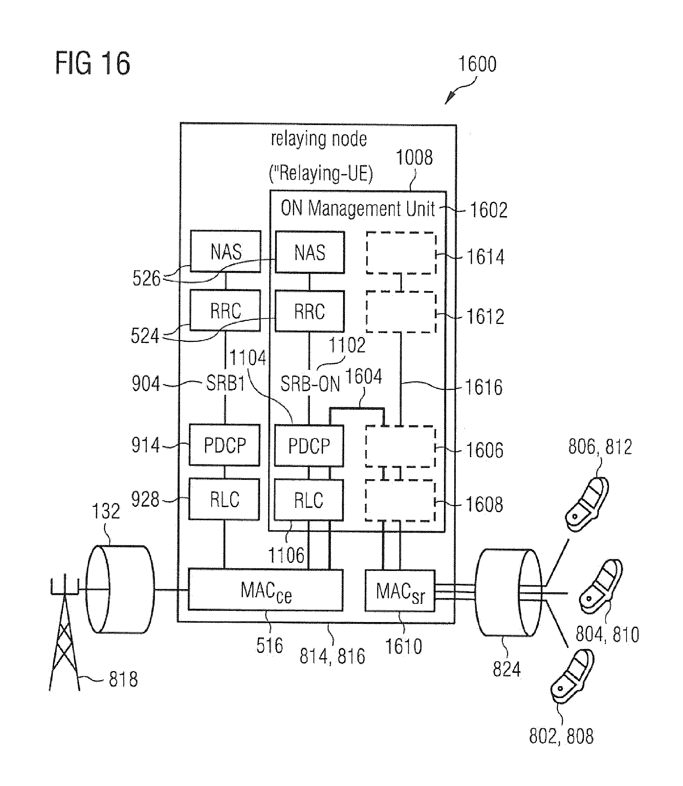

FIG. 16 shows a portion 1600 of a mobile radio communication system in accordance with an aspect of this disclosure.

As shown in FIG. 16, the mobile radio communication terminal device (UE) 814, 816 acting as the relaying node in the opportunistic network 820, 822 also provides a communication protocol stack 1602 implementing a communication protocol in accordance with one or more short range radio technologies as described above. Reference numberal 1604 in FIG. 16 denotes the user plane 504 data traffic processed by the mobile radio cell communication protocols, e.g. in accordance with LTE. In this case, the PDCP layer 522 including the PDCP layer entitiy 1104 may ba coupled with a corresponding protocol layer entity 1606 of a short range radio communication technology. Furthermore, another link layer entity 1608 of the used short range radio communication technology may be provided, if present in the respective short range radio communication technology. Moreover, a MAC layer 1610 of the used short range radio communication technology is provided. Furthermore, layer entities 1612, 1614 of the used short range radio communication technology corresponding to the RRC layer 524 and the NAS layer 526, respectively, are provided, if present, to control the data communication, in other words the data transmission using the short range radio communication technology. Thus, the mobile radio communication terminal device (UE) 814, 816 acting as the relaying node in the opportunistic network 820, 822 provides one or more short range radio links 824 to the other mobile radio communication terminal devices 802, 804, 806, 808, 810, 812 of the respective opportunistic network 820, 822. Reference numberal 1616 in FIG. 16 denotes the control plane data of the short range radio communication technology used. In FIG. 16 the OMU is shown as a cross layer funcional entity, i.e. it may exchange information with various layers of the protocol stack (for example, it may retrieve information from any of the SRB-ON 1102 protocol stack entities 524, 526, 1104,1106 and configure any of the control plane entities 1606, 1608, 1612, 1614 of the short range communication technology branch 1616, and vice versa).

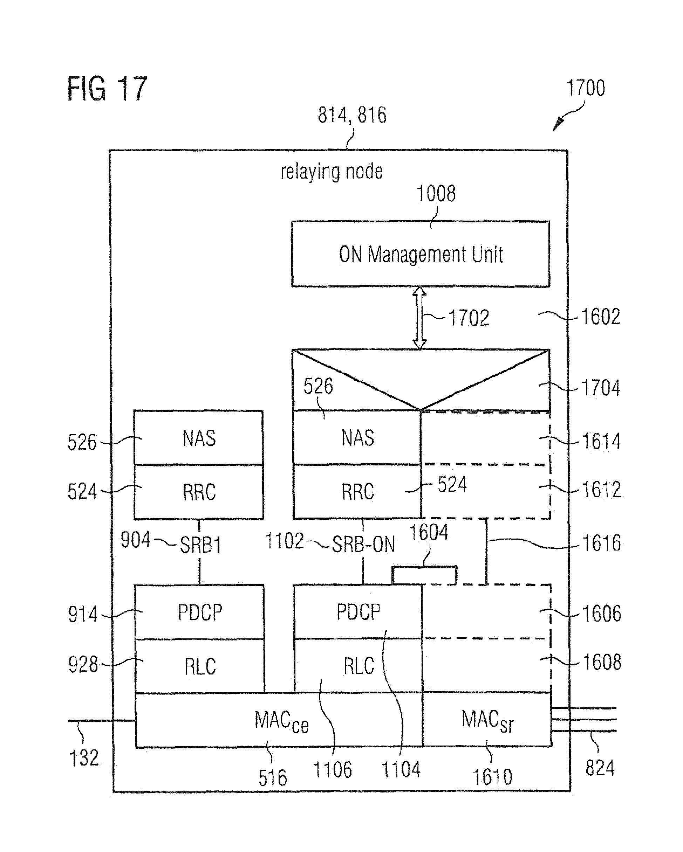

FIG. 17 shows a portion 1700 of a mobile radio communication system in accordance with an aspect of this disclosure.

The mobile radio communication terminal device (UE) 814, 816 of FIG. 17 is similar to the mobile radio communication terminal device (UE) 814, 816 of FIG. 16; therefore, e.g. only, the differences will be described in the following in more detail. With respect to the other features, reference is made to the description of the mobile radio communication terminal device 814, 816 of FIG. 16.

The mobile radio communication terminal device (UE) 814, 816 of FIG. 17 may include a separate OMU 1008 (which may be implemented by another circuit or processor than the other components of the mobile radio communication terminal device 814, 816), which may be coupled to network layer entities of the mobile radio communication terminal device 814, 816, such as e.g. the NAS layer 526 entities or the corresponding layer entity of the used short range radio communication technology, via an interface 1702 configured to exchange OMU 1008 management and control commands, which will be described in more detail further below, and optionally via an additional relaying layer (which may be implemented only in the control plane of the respective communication protocol) 1704. The relaying layer 1704 is responsible and configured to determine whether a received message is intended for the OMU or for a device connected via short range communication technology to the relaying node. If it is intended for a device connected via short range communication technology, the message is adapted by the relaying layer 1704 to the protocol used for the short range connection and transmitted to the relevant device. If it is intended for the OMU, the received message is passed on to the OMU over the interface 1702, for instance as a ON management command or as an ON control command (if needed, the received message may be adapted to the characteristics of the interface 1702). As shown in FIGS. 16 and 17, the SRB1 904 may be configured for carrying intrinsic data traffic within the mobile radio communication terminal device (UE) 814, 816.

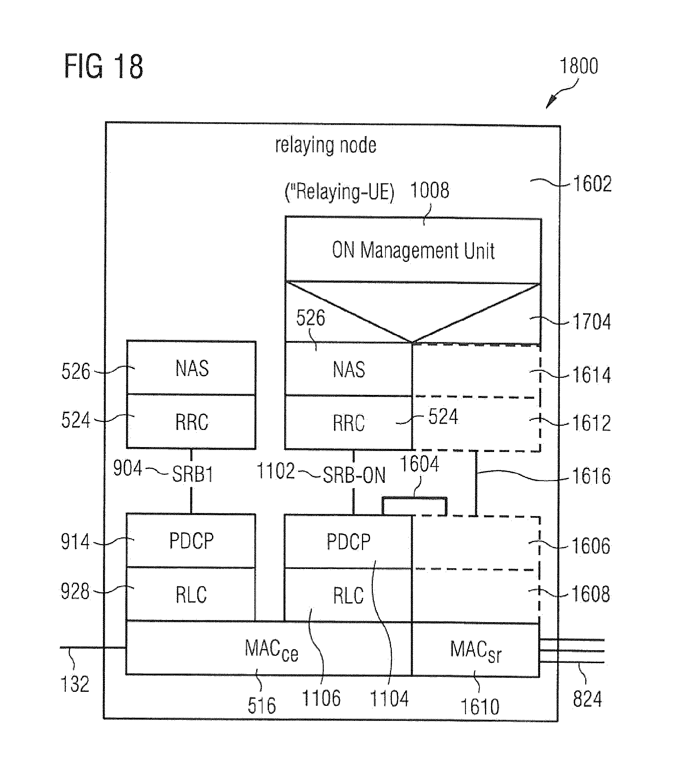

FIG. 18 shows a portion 1800 of a mobile radio communication system in accordance with an aspect of this disclosure.

The mobile radio communication terminal device 814, 816 of FIG. 18 is similar to the mobile radio communication terminal device 814, 816 of FIG. 17; therefore, only the differences will be described in the following in more detail. With respect to the other features, reference is made to the description of the mobile radio communication terminal device 814, 816 of FIGS. 16 and 17.

In the mobile radio communication terminal device (UE) 814, 816 of FIG. 18, the OMU 1008 may be integrated with the other components implementing the respective communication protocol, e.g. monolithically integrated on the same chip or die. The interface 1702 may be omitted.

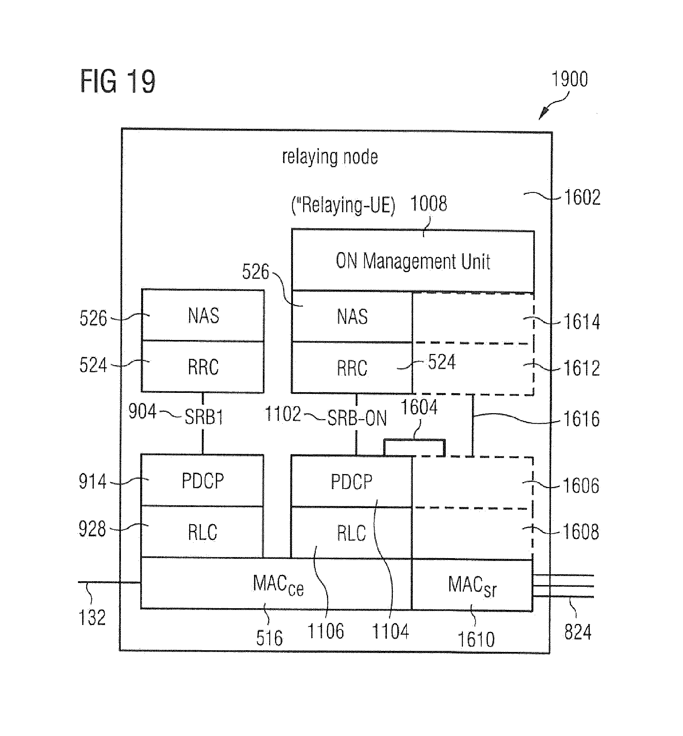

FIG. 19 shows a portion 1900 of a mobile radio communication system in accordance with an aspect of this disclosure.

The mobile radio communication terminal device 814, 816 of FIG. 19 is similar to the mobile radio communication terminal device (UE) 814, 816 of FIG. 18; therefore, only the differences will be described in the following in more detail. With respect to the other features, reference is made to the description of the mobile radio communication terminal device 814, 816 of FIGS. 16, 17 and 18.

In the mobile radio communication terminal device 814, 816 of FIG. 19, the OMU 1008 may be integrated with the other components implementing the respective communication protocol, e.g. monolithically integrated on the same chip or die. The interface 1702 and the relaying layer 1704 may be omitted.

Some possible implementations as to how a signalling radio bearer - opportunistic network (SRB-ON) may be implemented in different procedures using an RRC communication protocol and for different purposes will be described in more detail below.

1) RRC Connection Establishment Procedure

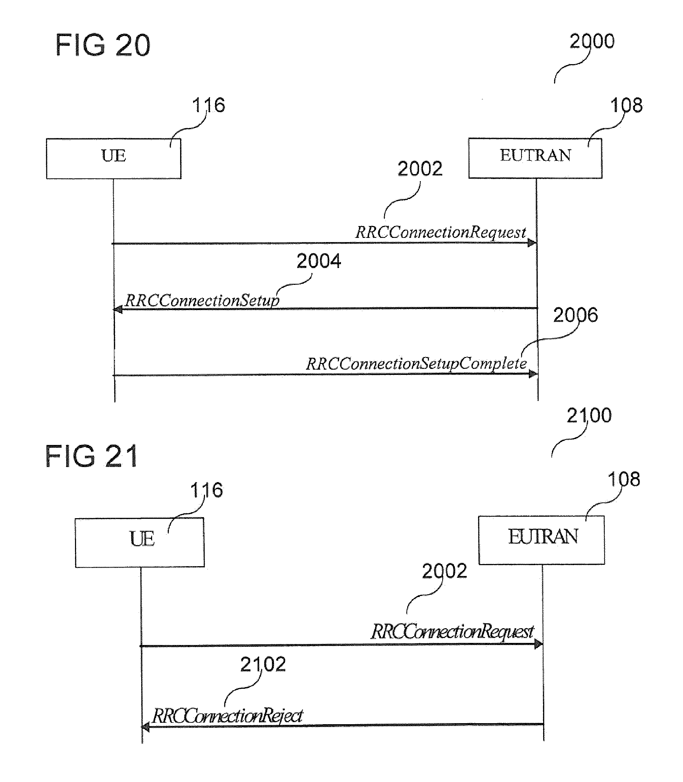

FIG. 20 shows a first message flow diagram 2000 illustrating a successful establishment of an RRC connection and FIG. 21 shows a second message flow diagram 2100 illustrating an RRC connection establishment process attempt, which is rejected by the network.

The purpose of this procedure is to establish an RRC connection. RRC connection establishment involves an SRB 1 establishment. The procedure is also used to transfer the initial NAS dedicated information/message from the UE (or the mobile radio communication terminal device) 116 (as shown in FIG. 1) to E-UTRAN 108. An RRC ConnectionRequest message 2002 is the first RRC message in the RRC connection establishment procedure. It may be used to indicate a UE's 116 intention to request the establishment of an RRC connection. The RRC ConnectionRequest message 2002 may be generated by the UE 116 and transmitted by the same to the E-UTRAN 108, e.g. to the connected base station (eNB) 110, 112, 114.

The RRC ConnectionRequest message 2002 may be used by the relaying node ("Relaying-UE") 814, 816 to request the establishment of a SRB-ON 1102. The RRC ConnectionRequest message 2002 may have the following structure:

RRC ConnectionRequest
Signalling radio bearer: SRB0
RLC-SAP: TM
Logical channel: CCCH
Direction: UE to E-UTRAN (uplink)

In the conventional process flow, upon receipt of the RRC ConnectionRequest message 2002, the E-UTRAN 108 may generate an RRC ConnectionSetup message 2004, which conventionally is used to establish an SRB1, and may transmit the RRC ConnectionSetup message 2004 to the UE 116. According to an aspect of this disclosure, the RRC ConnectionSetup message 2004 may also be used to establish an SRB-ON 1102 in accordance with an aspect of this disclosure, e.g. to request the establishment of the SRB-ON 1102 by the UE 116. Part of the the RRC ConnectionSetup message 2004 is the Information Element (IE) RadioResourceConfigDedicated which may be used to setup/modify/release RBs, to modify the MAC main configuration, to modify the SPS configuration and to modify the dedicated physical configuration. The RRC ConnectionSetup message 2004 may have the following structure:

RRC ConnectionSetup
Signalling radio bearer: SRB0
RLC-SAP: TM
Logical channel: CCCH
Direction: E-UTRAN to UE (downlink)

After having established the SRB-ON 1102, the UE generates an RRC ConnectionSetupComplete message 2006 and transmits the same to the E-UTRAN 108. After the receipt of the RRC ConnectionSetupComplete message 2006 by the E-UTRAN 108, the RRC connection establishment procedure is completed and an SRB-ON 1102 is established.

As shown in FIG. 21, after the receipt of the RRC ConnectionRequest message 2002, since the RRC connection establishment process attempt is rejected by the network, the E-UTRAN 108 generates a RRC ConnectionReject message 2102 and transmits it to the UE 116.

2) RRC Connection Re-configuration Procedure

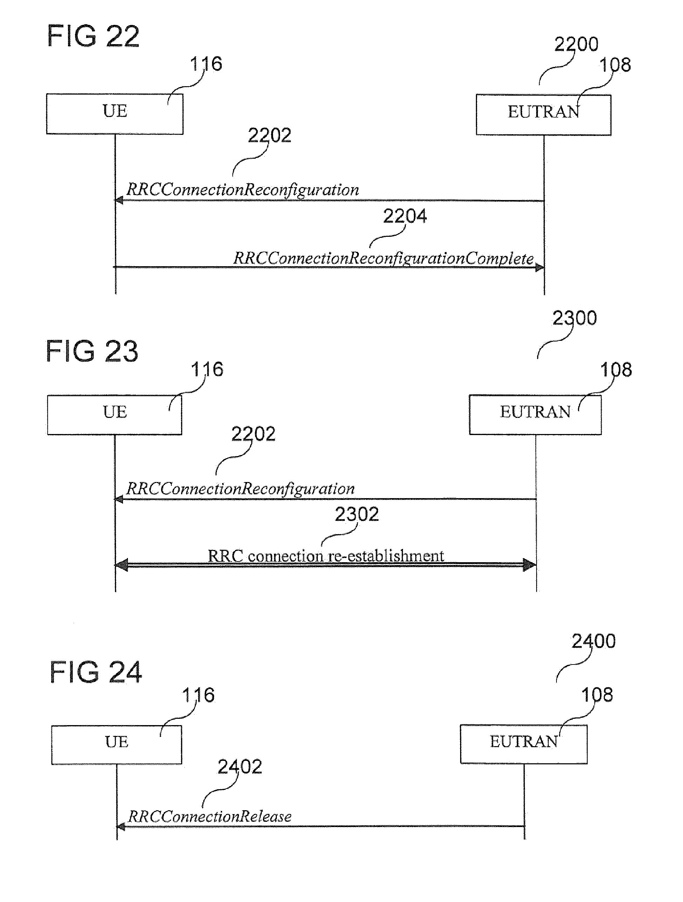

FIG. 22 shows a third message flow diagram 2200 illustrating a successful re-configuration of an RRC connection and FIG. 23 shows a fourth message flow diagram 2400 illustrating a failed RRC connection re-configuration attempt.

The purpose of this procedure is to modify an RRC connection, e.g. to establish/modify/release RBs, to perform handover, to setup/modify/release measurements. As part of the procedure, NAS dedicated information may be transferred from E-UTRAN 108 to the UE 116. An RRC ConnectionReconfiguration message 2202 is the first RRC message in the RRC connection re-configuration procedure 2200, 2300. The RRC ConnectionReconfiguration message 2202 may be generated by the E-UTRAN 108 and may be transmitted to the UE 116. It may be used to indicate E-UTRAN's 108 intention to modify an RRC connection. It may convey (among other pieces of information) information pertaining to radio resource configuration (including RBs, MAC main configuration and physical channel configuration) including any associated dedicated NAS information and security configuration.

According to an aspect of this disclosure, the RRC ConnectionReconfiguration message 2202 may also be used by E-UTRAN 108 to modify an SRB-ON 1102 (for instance with respect to radio resource configuration and security configuration). The RRC ConnectionReconfiguration message 2202 may have the following structure:

RRC ConnectionReconfiguration
Signalling radio bearer: SRB1 / SRB-ON
RLC-SAP: AM
Logical channel: DCCH
Direction: E-UTRAN to UE (downlink)

Furthermore, an RRC ConnectionReconfigurationComplete message 2204 may be used to confirm the successful completion of an RRC connection reconfiguration. The RRC ConnectionReconfigurationComplete message 2204 may be generated by the UE 116 and may be transmitted to the E-UTRAN 108. In an aspect of this disclosure, the RRC ConnectionReconfigurationComplete message 2204 may also be used by a relaying node ("Relaying-UE") 814, 816 to confirm the successful completion of an RRC connection reconfiguration process. The RRC ConnectionReconfigurationComplete message 2204 may have the following structure:

RRC ConnectionReconfigurationComplete
Signalling radio bearer: SRB1/ SRB-ON
RLC-SAP: AM
Logical channel: DCCH
Direction: UE to E-UTRAN (uplink)

After the receipt of the RRC ConnectionReconfigurationComplete message 2204 by the E-UTRAN 108, the RRC connection re-configuration procedure is completed and an SRB-ON 1102 may be re-configured.

As shown in FIG. 23, a RRCConnectionReestablishment procedure (designated by means of a double arrow 2302) may be used as a response to the RRC ConnectionReconfiguration message 2202 (in the failure case) to resolve contention and to re-establish SRB1. The RRCConnectionReestablishment procedure 2302 may also be used to resolve contention and to re-establish SRB-ON (in the failure case). Details of the RRC Connection Re-establishment Procedure will be described below.

3) RRC Connection Re-establishment Procedure

An RRC ConnectionReestablishmentRequest message may be the first RRC message in the RRC connection re-establishment procedure. It may be used to indicate a UE's 116 intention to request the reestablishment of an RRC connection. In an aspect of this disclosure, the RRC ConnectionReestablishmentRequest message may also be used by a relaying node ("Relaying-UE") 814, 816 to request the re-establishment of the SRB-ON 1102. The RRC ConnectionReestablishmentRequest message may have the following structure:

RRC ConnectionReestablishmentRequest
Signalling radio bearer: SRB0
RLC-SAP: TM
Logical channel: CCCH
Direction: UE to E-UTRAN (uplink)

Furthermore, an RRC ConnectionReestablishment message may be used as a response to the RRC ConnectionReestablishmentRequest message (in the successful case) to re-establish the SRB 1. In an aspect of this disclosure, an RRC ConnectionReestablishment message may also be used to re-establish the SRB-ON 1102. The RRC ConnectionReestablishment message may have the following structure:

RRC ConnectionReestablishment
Signalling radio bearer: SRB0
RLC-SAP: TM
Logical channel: CCCH
Direction: E-UTRAN to UE (downlink)

Moreover, an RRC Connection Reestablishment Complete message may be used to confirm the successful completion of an RRC connection reestablishment. Further, the RRC ConnectionReestablishmentComplete message may also be used by a relaying node ("Relaying-UE") 814, 816 to confirm the successful completion of an RRC connection reestablishment. The RRC ConnectionReestablishmentComplete message may have the following structure:

RRCConnectionReestablishmentComplete
Signalling radio bearer: SRB1 / SRB-ON
RLC-SAP: AM
Logical channel: DCCH
Direction: UE to E-UTRAN (uplink)

4) RRC Connection Release Procedure

FIG. 24 shows a fifth message flow diagram 2400 illustrating a release of an RRC connection.

In an aspect of this disclosure, an RRC ConnectionRelease message 2402 may be provided to command the release of an RRC connection. The RRC ConnectionRelease message 2402 may also be used to command the release of the SRB-ON 1102. The RRC ConnectionRelease message 2402 may have the following structure:

RRCConnectionRelease
Signalling radio bearer: SRB1 / SRB-ON
RLC-SAP: AM
Logical channel: DCCH
Direction: E-UTRAN to UE (downlink)

In an aspect of this disclosure, a mechanism is provided to distinguish between various control plane data paths. The following table shows different logical channel identities that may be used in the MAC layer 516 to separate the different c-plane data paths:

| **SRB** | **Logical Channel Identity** | **Comment** |
|---|---|---|
| 1 | 1 | as defined in TS 36.331 |
| 2 | 2 | as defined in TS 36.331 |
| ON | 3 | New |

In the following tables some example SRB configurations for the SRB1 904 and the new SRB-ON 1102 are shown:

SRB1 904 parameters:

| **Name** | **Value** | **Semantics description** | **Ver** |
|---|---|---|---|
| RLC configuration CHOICE | Am | | |
| *ul-RLC-Config* | | | |
| *>t-PollRetransmit* | ms45 | | |
| *>pollPDU* | infinity | | |
| *>pollByte* | infinity | | |
| *>maxRetxThreshold* | t4 | | |
| *dl-RLC-Config* | | | |
| *> t-Reordering* | ms35 | | |
| *>t-StatusProhibit* | ms0 | | |
| Logical channel configuration | | | |

| ***Priority*** | **2** | **Second Highest priority** | |
|---|---|---|---|
| *prioritisedBitRate* | Infinity | | |
| *bucketSizeDuration* | N/A | | |
| *logicalChannelGroup* | 0 | | |
| *logicalChannelSR-Mask-r9* | Release | | |

SRB-ON 1102 parameters:

| **Name** | **Value** | **Semantics description** | **Ver** |
|---|---|---|---|
| RLC configuration CHOICE | Am | | |
| *ul-RLC-Config* | | | |
| *>t-PollRetransmit* | ms45 | | |
| *>pollPDU* | infinity | | |
| *>pollByte* | infinity | | |
| *>maxRetxThreshold* | t4 | | |
| *dl-RLC-Config* | | | |
| *> t-Reordering* | ms35 | | |
| *>t-StatusProhibit* | ms0 | | |
| Logical channel configuration | | | |

| ***Priority*** | **1** | **Highest priority** | |
|---|---|---|---|
| *prioritisedBitRate* | Infinity | | |
| *bucketSizeDuration* | N/A | | |
| *logicalChannelGroup* | 0 | | |
| *logicalChannelSR-Mask-r9* | release | | |

The SRB-ON 1102 may be provided to specify priorities for SRB 1/2 (the bearers used to control RN-Intrinsic-Traffic (TRIN)) 904, 906 and SRB-ON (the bearer used to control the ON behaviour of the relaying node) 1102 handling, and resource partitioning details among SRB1/2 904, 906 and SRB-ON 1102 on the cellular air interface (for instance LTE Uu) 132 respectively, such as e.g. SRB1 = prio 2 and SRB-ON = prio 1 or SRB1 = minimum 30% of the resources and SRB-ON = up to 70% of the resources.

It may be advantageous to express these priorities and resource partitioning details in SRB-ON 1102 in relation to SRB 1/2 904, 906 (e.g., SRB-ON priority = higher/lower than SRB1/2 priority; SRB-ON resources = 120% of SRB1/2 resources). In doing so, the information elements and parameters for SRB 1/2 904, 906 do not need to be altered.

The SRB-ON 1102 may be provided to exchange data for controlling the ON 820, 822 behaviour of the relaying node 814, 816 (e.g., it is used to start/stop the operation of the relaying node 814, 816 ("Relaying-UE") or to control/manage/modify the operation of an established ON 820, 822 as will be described below).

In the following, various message flow diagrams will be described illustrating message flows which show two new messages each. These messages may be RRC messages and in another aspect of this disclosure these messages may be NAS messages.

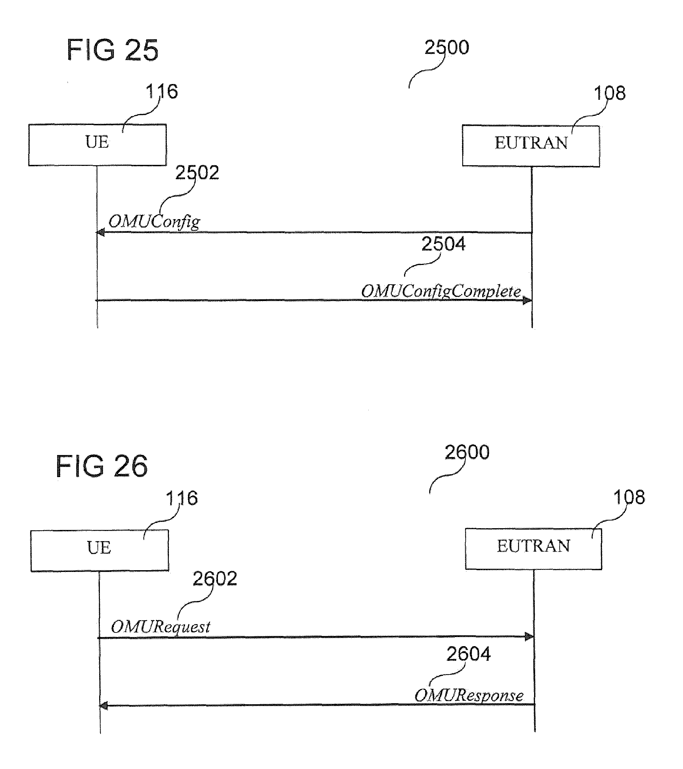

FIG. 25 shows a sixth message flow diagram 2500 illustrating a configuration of the opportunistic network 820, 822 behaviour of the relaying node 814, 816 in accordance with an aspect of this disclosure. A sixth transaction flow may be used to configure the ON 820, 822 behaviour of the relaying node 814, 816 ("UE"). For this purpose an OMUConfig message 2502 may for instance contain configuration settings for the ON 820, 822. The OMUConfig message 2502 may be generated by the E-UTRAN 108 and may be transmitted to the UE 116 acting as a relaying node 814, 816. The relaying node 814, 816 ("UE") may confirm the successful or unsuccessful handling of the OMUConfig message 2502 with an OMUConfigComplete message 2504 which may be generated in the UE 116 and may be transmitted to the E-UTRAN 108. With this message flow E-UTRAN 108 may trigger the relaying node 814, 816 to start/stop/modify the operation of the relaying node 814, 816 and with that the formation of an ON 820, 822.

FIG. 26 shows a seventh message flow diagram 2600 illustrating a successful OMU request in accordance with an aspect of this disclosure. This seventh transaction flow may be used to send queries from the relaying node 814, 816 ("UE") to the network (e.g. E-UTRAN 108). For this purpose an OMURequest message 2602 may for instance contain node discovery information. The OMURequest message 2602 may be generated in the UE 116 and may be transmitted to the E-UTRAN 108. The network (e.g. E-UTRAN 108) may confirm the receipt of the OMURequest message 2602 together with some instructions, parameters, and various other pieces of information with an OMUResponse message 2604. The OMUResponse message 2604 may be generated by the E-UTRAN 108 and may be transmitted to the UE 116. With this message flow, the relaying node 814, 816 may trigger E-UTRAN 108 to determine whether a request to join the ON 820, 822 is granted or not.

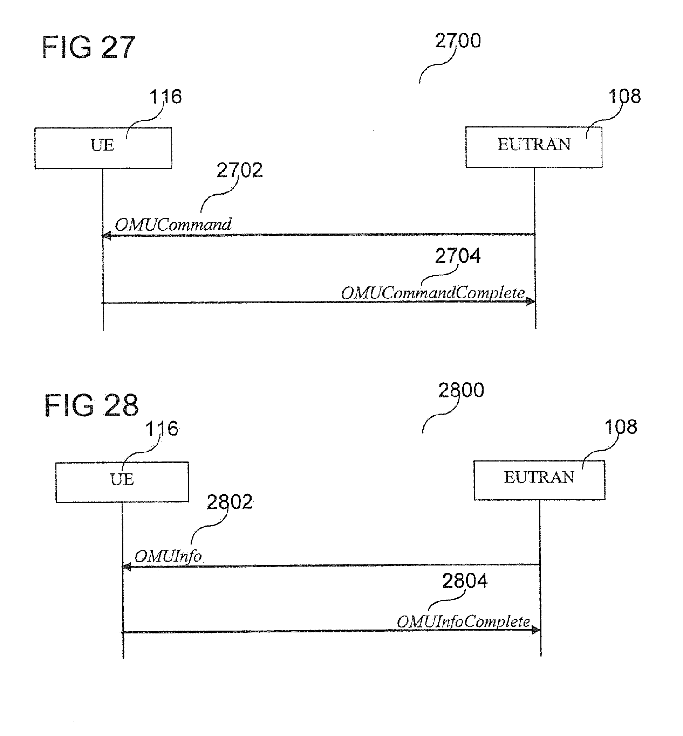

FIG. 27 shows an eighth message flow diagram 2700 illustrating a successful OMU command in accordance with an aspect of this disclosure. This eighth transaction flow may be used to send operation control commands to the relaying node 814, 816 ("UE"). For this purpose an OMUCommand message 2702 may for instance contain configuration settings for the ON 820, 822. The OMUCommand message 2702 may be generated by the E-UTRAN 108 and may be transmitted to the UE 116 acting as the relaying node 814, 816. The relaying node 814, 816 ("UE") may confirm the successful or unsuccessful handling of the OMUCommand message 2702 with the OMUCommandComplete message 2704. The OMUCommandComplete message 2704 may be generated by the UE 116 and may be transmitted to the E-UTRAN 108. With this message flow E-UTRAN 108 may for example trigger the relaying node 814, 816 to manage the ON 820, 822.

FIG. 28 shows a ninth message flow diagram 2800 illustrating a successful OMU info in accordance with an aspect of this disclosure. This ninth transaction flow may be used to send various pieces of information to the relaying node ("UE") 814, 816. For this purpose, an OMUInfo message 2802 may for instance contain advertisement or access parameters for the ON 820, 822. The OMUInfo message 2802 may be generated by the E-UTRAN 108 and may be transmitted to the UE 116. The relaying node ("UE") 814, 816 may confirm the successful receipt of the OMUInfo message 2802 with an OMUInfoComplete message 2804. The OMUInfoComplete message 2804 may be generated by the UE 116 and may be transmitted to the E-UTRAN 108. With this message flow E-UTRAN 108 may for example trigger the relaying node 814, 816 to broadcast certain ON 820, 822 advertisements or to restrict access to the ON 820, 822.

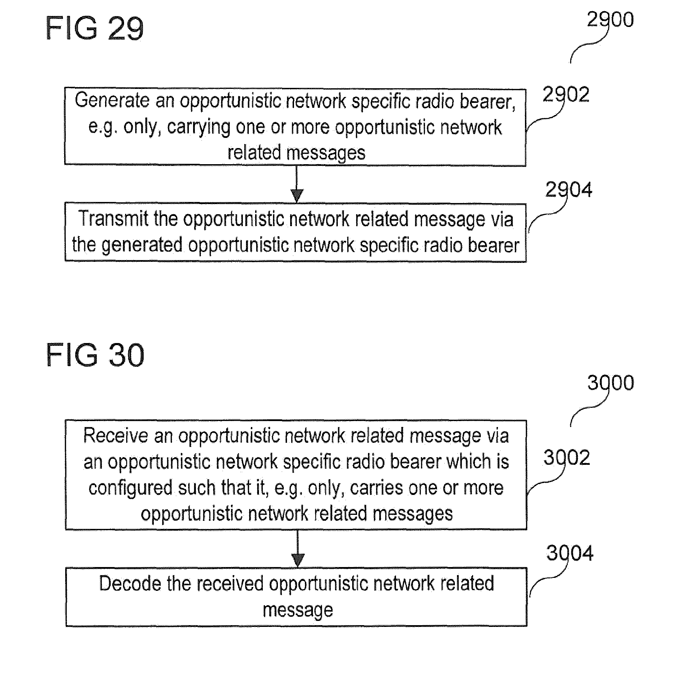

FIG. 29 illustrates an exemplary process 2900 for transmitting an opportunistic network related message. The process 2900 may include, in 2902, generating an opportunistic network specific radio bearer, e.g. only, carrying opportunistic network related messages; and, in 2904, transmitting an opportunistic network related message via the generated opportunistic network specific radio bearer.

The opportunistic network specific radio bearer may be generated as an opportunistic network specific signaling radio bearer. The opportunistic network specific signaling radio bearer may be generated as an opportunistic network specific signaling radio bearer of type 1. The opportunistic network related message may be an opportunistic network related control message, e.g. an opportunistic network related radio resource control message. The opportunistic network related control message may include information to control at least one of the following: separation of data flows of one or more user data messages; prioritization of logical channels to be generated; error detection; error correction; data encryption; data integrity protection; and addressing one or more messages. Further, the opportunistic network specific radio bearer may be a radio bearer in accordance with a Third Generation Partnership Project mobile radio communication standard, e.g. in accordance with a Long Term Evolution mobile radio communication standard, e.g. in accordance with a Universal Mobile Telecommunications Standard mobile radio communication standard. The opportunistic network specific radio bearer (SRB-ON) may be generated by a mobile radio communication terminal apparatus (UE) 116 and/or may be generated by a mobile radio communication base station (eNB) 110, 112, 114.

FIG. 30 illustrates an exemplary process 3000 for receiving an opportunistic network related message. The process 3000 may include, in 3002, receiving an opportunistic network related message via an opportunistic network specific radio bearer which is configured to, e.g. only, carry opportunistic network related messages; and, in 3004, decoding the received opportunistic network related message.

The opportunistic network specific radio bearer may be an opportunistic network specific signaling radio bearer. The opportunistic network specific signaling radio bearer may be an opportunistic network specific signaling radio bearer of type 1. The opportunistic network related message may be an opportunistic network related control message, e.g. an opportunistic network related radio resource control message. The opportunistic network related control message may include information to control at least one of the following: separation of data flows of one or more user data messages; prioritization of logical channels to be generated; error detection; error correction; data encryption; data integrity protection; and addressing one or more messages. Further, the opportunistic network specific radio bearer may be a radio bearer in accordance with a Third Generation Partnership Project mobile radio communication standard, e.g. in accordance with a Long Term Evolution mobile radio communication standard, e.g. in accordance with a Universal Mobile Telecommunications Standard mobile radio communication standard. The opportunistic network specific radio bearer may be generated by a mobile radio communication terminal apparatus (UE) 116 and/or may be generated by a mobile radio communication base station (eNB) 110, 112, 114.

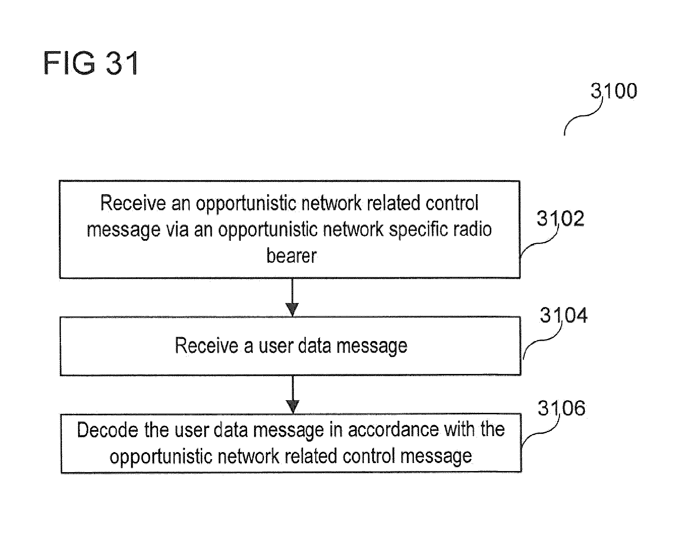

FIG. 31 illustrates an exemplary process 3100 for processing messages. The process 3100 may include, in 3102, receiving an opportunistic network related control message via an opportunistic network specific radio bearer; in 3104, receiving a user data message; and, in 3106, decoding the user data message in accordance with the opportunistic network related control message.

The opportunistic network specific radio bearer may be an opportunistic network specific signaling radio bearer. The opportunistic network specific signaling radio bearer may be an opportunistic network specific signaling radio bearer of type 1. The opportunistic network related message may be an opportunistic network related control message, e.g. an opportunistic network related radio resource control message. The opportunistic network related control message may include information to control at least one of the following: separation of data flows of one or more user data messages; prioritization of logical channels to be generated; error detection; error correction; data encryption; data integrity protection; and addressing one or more messages. Further, the opportunistic network specific radio bearer may be a radio bearer in accordance with a Third Generation Partnership Project mobile radio communication standard, e.g. in accordance with a Long Term Evolution mobile radio communication standard, e.g. in accordance with a Universal Mobile Telecommunications Standard mobile radio communication standard. The opportunistic network specific radio bearer may be generated by a mobile radio communication terminal apparatus (UE) 116 and/or may be generated by a mobile radio communication base station (eNB) 110, 112, 114. In an aspect of this disclosure, the method may further include determining as to whether the decoded user data message is a local message to be received by the apparatus decoding the user data message or as to whether the decoded user data message is to be forwarded by the apparatus decoding the user data message to another apparatus. The method may further include in case it has been determined that the decoded user data message is to be forwarded by the apparatus decoding the user data message to another apparatus, transmitting the user data message to the other apparatus.

In an aspect of this disclosure, the one or more of the base stations may be configured as so-called home base stations (e.g. Home NodeB, e.g. Home eNodeB). In an example, a 'Home NodeB' may be understood in accordance with 3GPP as a trimmed-down version of a cellular mobile radio base station optimized for use in residential or corporate environments (e.g., private homes, public restaurants or small office areas). In various examples throughout this description, the terms 'Home Base Station', 'Home NodeB', 'Home eNodeB', and 'Femto Cell' are referring to the same logical entity and will be used interchangeably throughout the entire description.

The so-called 'Home Base Station' concept may support receiving and initiating cellular calls at home, and uses a broadband connection (typically DSL, cable modem or fibre optics) to carry traffic to the operator's core network bypassing the macro network architecture (including legacy NodeBs or E-NodeBs, respectively), i.e. the legacy UTRAN or E-UTRAN, respectively. Femto Cells may operate with all existing and future handsets rather than requiring customers to upgrade to expensive dual-mode handsets or UMA devices.

From the customer's perspective, 'Home NodeBs' offer the user a single mobile handset with a built-in personal phonebook for all calls, whether at home or elsewhere. Furthermore, for the user, there is only one contract and one bill. Yet another effect of providing 'Home NodeBs' may be seen in the improved indoor network coverage as well as in the increased traffic throughput. Moreover, power consumption may be reduced as the radio link quality between a handset and a 'Home Base Station' may be expected to be much better than the link between a handset and legacy 'NodeB'.

In an aspect of this disclosure, access to a 'Home NodeB' may be allowed for a closed user group only, i.e. the communication service offering may be restricted to employees of a particular company or family members, in general, to the members of the closed user group. This kind of 'Home Base Stations' may be referred to as 'Closed Subscriber Group Cells' (CSG Cells) in 3GPP. A mobile radio cell which indicates being a CSG Cell may need to provide its CSG Identity to the mobile radio communication terminal devices (e.g. the UEs). Such a mobile radio cell may only be suitable for a mobile radio communication terminal device if its CSG Identity is e.g. listed in the mobile radio communication terminal device's CSG white list (a list of CSG Identities maintained in the mobile radio communication terminal device or in an associated smart card indicating the mobile radio cells which a particular mobile radio communication terminal device is allowed to use for communication). In an aspect of this disclosure, a home base station may be a consumer device that is connected to the mobile radio core network via fixed line (e.g. DSL) or wireless to a mobile radio macro cell. It may provide access to legacy mobile devices and increase the coverage in buildings and the bandwidth per user. A home base station may be run in open or closed mode. In closed mode the home base station may provide access to a so-called closed subscriber group (CSG) only. Examples for such closed subscriber groups are families or some or all employees of a company, for example.

Since a 'Femto Cell' entity or 'Home Base Station' entity will usually be a box of small size and physically under control of the user, in other words, out of the MNO's domain, it could be used nomadically, i.e. the user may decide to operate it in his apartment, but also in a hotel when he is away from home, e.g. as a business traveller. Additionally a 'Home NodeB' may be operated only temporarily, i.e. it can be switched on and off from time to time, e.g. because the user does not want to operate it over night or when he leaves his apartment.

Further, the relaying node may be configured as a home base station, e.g. as a Home NodeB, e.g. as a Home eNodeB, instead of a mobile radio communication terminal device such as e.g. a UE.

Moreover, in an aspect of this disclosure, a method for transmitting an opportunistic network related message is provided. The method may include generating an opportunistic network specific service access point (SAP) for only carrying opportunistic network related messages, wherein the service access point (SAP) may be generated by a data link layer entity, e.g. an PDCP layer entity or by an RLC layer entity. The service access point (SAP) may be provided for a network layer entity, such as e.g. for an RRC layer entity. The method may further include transmitting an opportunistic network related message using the opportunistic network specific service access point (SAP).

Moreover, in an aspect of this disclosure, an apparatus for transmitting an opportunistic network related message is provided. The apparatus may include a service access point generator configured to generate an opportunistic network specific service access point for, e.g. only, carrying opportunistic network related messages. The service access point generator may be part of a link layer entity, e.g. an PDCP layer entity or by an RLC layer entity. The service access point may be provided for a network layer entity, such as e.g. for an RRC layer entity. The apparatus may further include a transmitter configured to transmit an opportunistic network related message using the opportunistic network specific service access point.

While the invention has been particularly shown and described with reference to specific aspects and implementations, it should be understood by those skilled in the art that various changes in form and detail may be made therein without departing from the spirit and scope of the invention as defined by the appended claims. The scope of the invention is thus indicated by the appended claims and all changes which come within the meaning and range of equivalency of the claims are therefore intended to be embraced.

## Claims

1. A method (2900) for transmitting an opportunistic network related message, the method comprising:
generating an opportunistic network specific radio bearer carrying opportunistic network related message traffic (2902); and
transmitting the opportunistic network related message via the generated opportunistic network specific radio bearer (2904).

2. The method (2900) of claim 1,
wherein generating the opportunistic network specific radio bearer (2902) includes generating an opportunistic network specific radio bearer only carrying opportunistic network related messages traffic.

3. The method (2900) of any one of claims 1 or 2,
wherein generating the opportunistic network specific radio bearer (2902) includes generating an opportunistic network specific signaling radio bearer.

4. The method (2900) of any one of claims 1 to 3,
wherein the opportunistic network specific signaling radio bearer is generated as an opportunistic network specific signaling radio bearer which provides an opportunistic network specific service access point for a network layer.

5. The method (2900) of any one of claims 1 to 4,
wherein the opportunistic network related message is an opportunistic network related control message, preferably an opportunistic network related radio resource control message.

6. A method (3100) for processing messages, the method comprising:
receiving an opportunistic network related control message via an opportunistic network specific radio bearer (3102);
receiving a user data message (3104); and
decoding the user data message in accordance with the opportunistic network related control message (3106).

7. The method (3100) of claim 6,
wherein the opportunistic network specific radio bearer is an opportunistic network specific signaling radio bearer;
wherein preferably the opportunistic network specific signaling radio bearer is an opportunistic network specific signaling radio bearer of type 1.

8. The method (3100) of any one of claims 6 or 7,
wherein the opportunistic network related message is an opportunistic network related control message.

9. The method (3100) of any one of claims 6 to 8, further comprising:
determining whether the decoded user data message is a local message to be received by the apparatus decoding the user data message or as to whether the decoded user data message is to be forwarded by the apparatus decoding the user data message to another apparatus;
wherein the method preferably further comprises: in case it has been determined that the decoded user data message is to be forwarded by the apparatus decoding the user data message to another apparatus, transmitting the user data message to the other apparatus.

10. An apparatus (1200) for transmitting an opportunistic network related message, the apparatus (1200) comprising:
a radio bearer generator (1202) configured to generate an opportunistic network specific radio bearer carrying opportunistic network related message traffic ; and
a transmitter (1204) configured to transmit the opportunistic network related message via the generated opportunistic network specific radio bearer.

11. The apparatus (1200) of claim 10,
wherein the radio bearer generator (1202) is configured to generate an opportunistic network specific radio bearer only carrying opportunistic network related messages.

12. The apparatus (1200) of any one of claims 10 or 11,
wherein the radio bearer generator (1202) is configured to generate the opportunistic network specific radio bearer as an opportunistic network specific signaling radio bearer.

13. An apparatus (1300) for receiving an opportunistic network related message, the apparatus comprising:
a receiver (1302) configured to receive an opportunistic network related message via an opportunistic network specific radio bearer which is configured to carry opportunistic network related message traffic; and
a decoder (1304) configured to decode the received opportunistic network related message.

14. The apparatus (1300) of claim 13,
wherein the receiver (1302) is configured to receive an opportunistic network related message via an opportunistic network specific radio bearer which is configured to only carry opportunistic network related messages.

15. The apparatus (1300) of any one of claims 13 or 14,
wherein the opportunistic network specific radio bearer is an opportunistic network specific signaling radio bearer, preferably an opportunistic network specific signaling radio bearer of type 1.
